(19) Europäisches Patentamt

European Patent Office

Office européen des brevets

(11) EP 0 368 587 B1

(12) **EUROPEAN PATENT SPECIFICATION**

(45) Date of publication and mention
of the grant of the patent:
**08.05.1996 Bulletin 1996/19**

(51) Int Cl.⁶: **G06F 15/78**

(21) Application number: **89311461.1**

(22) Date of filing: **06.11.1989**

(54) **Vector processing apparatus**

Vektorprozessor

Processeur vectoriel

(84) Designated Contracting States:
**DE FR GB**

(30) Priority: **07.11.1988 JP 280997/88**

(43) Date of publication of application:
**16.05.1990 Bulletin 1990/20**

(73) Proprietor: **FUJITSU LIMITED**
**Kawasaki-shi, Kanagawa 211 (JP)**

(72) Inventors:
 • **Nakatani, Shohji**
   **Kawasaki-shi Kanagawa 211 (JP)**
 • **Sugiura, Nobuyuki**
   **Kawasaki-shi Kanagawa 214 (JP)**
 • **Seki, Ken**
   **Kunitachi-shi Tokyo 186 (JP)**

(74) Representative: **Stebbing, Timothy Charles et al**
**Haseltine Lake & Co.**
**Hazlitt House**
**28 Southampton Buildings**
**Chancery Lane**
**London WC2A 1AT (GB)**

(56) References cited:
**EP-A- 0 123 509**     **EP-A- 0 223 570**
**EP-A- 0 242 882**     **US-A- 4 706 191**

## Description

The present invention relates to a vector processing apparatus which carries out vector calculation.

In scientific or technological calculations, loop calculations are frequently carried out. The loop calculations can be transformed into vector calculations, e. g., A(i) + B(i) = C(i), (i = 0 to n-1).

To increase the speed of vector calculations, computer systems carrying out high speed calculations, such as supercomputers, are equipped with a vector processing apparatus for carrying out vector calculations, in addition to a scalar data processing apparatus.

In a vector processing apparatus, a plurality of vector processing units are provided, and each vector processing unit carries out a share of a vector calculation concurrently with the other vector processing units. For example, a vector calculation A(i) + B(i) = C(i), (i = 0 to n-1) is shared by first and second vector processing units in such a manner that the first vector processing unit takes a half share of the vector calculation for half of the elements, A(4m) + B(4m) = C(4m), and A(4m+1) + B(4m+1) = C(4m+1), and the second vector processing unit takes the other half of the vector calculation for the other half of the elements, A(4m+2) + B(4m+2) = C(4m+2), and A(4m+3) + B(4m+3) = C(4m+3), where $0 \leq 4m$, and $4m+3 \leq n-1$, and n is the total number of elements, and the first and second vector processing units concurrently carry out respective shares of the vector calculation, for further increasing calculation speed.

In the above vector processing apparatus having a plurality of vector processing units, the plurality of vector processing units independently request access to the main storage, and the scalar unit (CPU) and an input and output processor (IOP) also independently request access to the main storage. Therefore, arbitration regarding access to the main storage between the plurality of vector processing units, the scalar unit (CPU), and the input and output processor (IOP), must be carried out to avoid a conflict. In addition, the order of the elements of the vector data must be maintained in the result of the arbitration between accesses from the plurality of vector processing units.

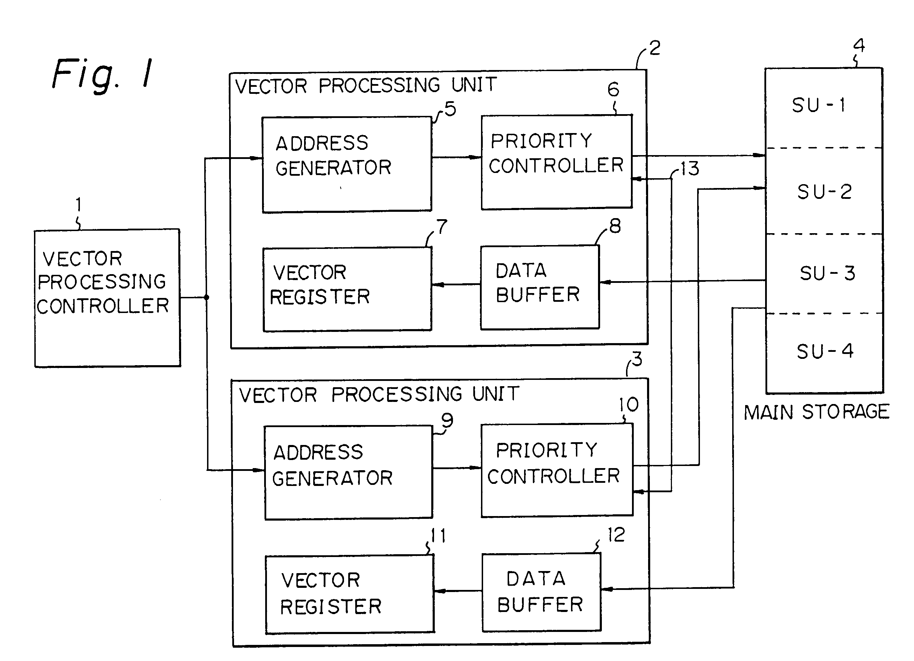

Figure 1 shows an outline of the construction of an example of an existing vector processing apparatus having a plurality of vector processing units.

In Fig. 1, reference numeral 1 denotes a vector processing controller, 2 and 3 each denote a vector processing unit, 4 denotes a main storage, 5 and 9 each denote an address generator, 6 and 10 each denote a priority controller, 8 and 12 each denote a data buffer, 7 and 11 each denote a vector register, and 13 denotes a route for a control signal.

In this example, the vector processing unit 2 carries out calculations of the (4m)-th and (4m+1)-th elements, and the vector processing unit 2 carries out calculations of the (4m+2)-th and (4m+3)-th elements, where $0 \leq 4m$ and $4m+3 \leq n-1$, and n is the total number of elements.

When the vector processing controller 1 receives a vector instruction from a scalar unit (CPU) (not shown), the vector processing controller 1 supplies control data including a start signal, an operation code (which defines the action to be performed, e.g., writing or reading), a leading address (LA, an address of a top element of vector data), a distance (D, a distance between addresses of successive elements), and a vector length (the number of elements in a vector data), etc., to the address generators 5 and 6.

The address generator 5 in the vector processing unit 2 generates addresses for accessing the main storage 4 for the calculations on the (4m)-th and (4m+1)-th elements, and the address generator 9 in the vector processing unit 3 generates addresses for accessing the main storage 4 for the calculations on the (4m+2)-th and (4m+3)-th elements, based on the above control data.

The priority controller 6 in the vector processing unit 2 carries out an arbitration between requests for accesses to the main storage 4 for the (4m)-th and (4m+1)-th elements, requests from the scalar unit (CPU), and requests from the input and output processor (IOP), and gives allowance to one of the above requests (for the (4m)-th and (4m+1)-th elements) from the vector processing unit 2, based on the addresses generated in the address generator 5, and the order of the elements. The highest priority is given to the request from the input and output processor (IOP), the next highest priority is given to the request from the scalar unit (CPU), and the allowance is given in the order of the elements, i. e., the (4m)-th element takes precedence over the (4m+1)-th element.

Similarly, the priority controller 10 in the vector processing unit 3 carries out an arbitration between requests for accesses to the main storage 4 for the (4m+2)-th and (4m+3)-th elements, requests from the scalar unit (CPU), and requests from the input and output processor (IOP), and gives allowance to one of the above requests (for the (4m+2)-th and (4m+3)-th elements) from the vector processing unit 3, based on the addresses generated in the address generator 9, and the order of the elements. Similarly, the highest priority is given to the request from the input and output processor (IOP), the next highest priority is given to the request from the scalar unit (CPU), and the allowance is given in the order of the elements, i. e., the (4m+2)-th element takes precedence over the (4m+3)-th element.

Further, to maintain the order of the elements of the vector data across both the vector processing units 2 and 3, before allowing the access for an element (i), one of the vector processing units 2 and 3 must know whether or not an access for an element which must be allowed before the element (i) (element designated by a smaller number than (i)) in the other vector processing unit, has been already allowed. For example, before allowing the access for the element 4m, the vector processing unit 2 must know whether or not the access to the main storage 4 for the element 4m-1 has already been allowed in the vector processing unit 3.

To assure the above order, in the construction of Fig. 1, the status of allowance in each vector processing unit is transmitted to the other vector processing unit through the route 13. However, in practice, each of the vector processing units 2 and 3 is formed on an individual circuit board, and therefore, the propagation delay time through the above route is large compared with the clock cycle of high speed computers when reporting the status of allowance across the different circuit boards.

In addition, in the construction of Fig. 1, to avoid competition between requests from both the vector processing units 2 and 3, predetermined alternative accessible timings are respectively assigned for the (4m)-th and (4m+1)-th elements in the vector processing unit 2, and the (4m+2)-th and (4m+3)-th elements in the vector processing unit 3.

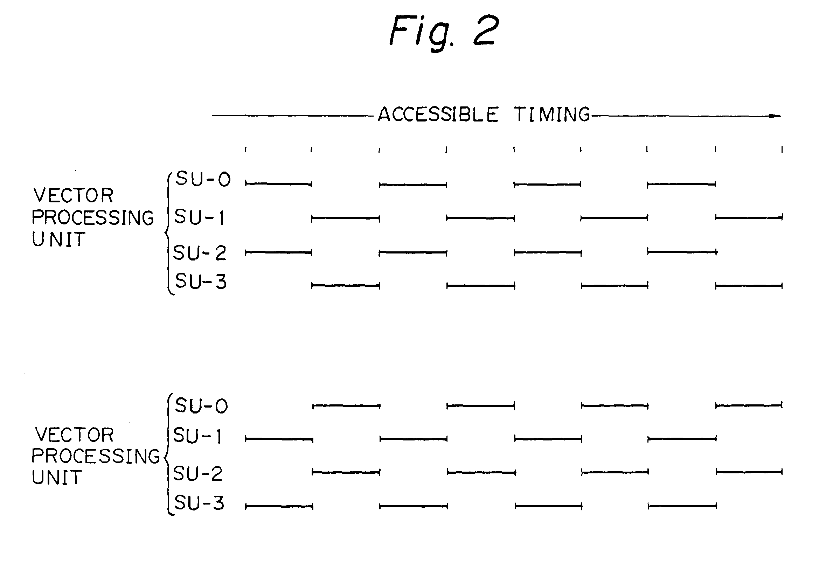

Usually, a main storage is comprised of a plurality of portions (banks or memory units), where each portion can be concurrently accessed, for example, the main storage 4 in the construction of Fig. 1 is comprised of four memory units, SU-1, SU-2, SU-3, and SU-4. For accessing these memory units, SU-1, SU-2, SU-3, and SU-4 from the vector processing units 2 and 3 without competition, the alternative timings as shown in Figure 2 are assigned.

As mentioned above, in the existing vector processing apparatus, each vector processing unit must wait to receive the status of allowance of access to the main storage from the other vector processing unit(s), before carrying out the arbitration. In addition, since, in the existing vector processing apparatus, predetermined (fixed) alternative timings are assigned for a plurality of vector processing units as mentioned above, each vector processing unit cannot access the main storage in a timing other than the above predetermined (fixed) timing, even when the target portion of the main storage is not busy at that timing. Namely, in the existing vector processing apparatus, the accesses to the main storage from a plurality of vector processing units are not effectively carried out, and therefore, a total access time to the main storage through a vector calculation is long.

It is therefore desirable to provide a vector processing apparatus having a plurality of vector processing units each concurrently carrying out a share of vector processing, wherein accesses from the vector processing units to a main storage is effectively carried out, and a total access time to the main storage through a vector calculation is reduced.

EP-A-0 123 509 discloses a vector processing system according to the preamble of accompanying claim 1. The system is provided with a conflict resolution network comprising a conflict resolution circuit for each of a plurality of sections of the main memory, interposed between each memory section and ports of the vector processing units. Each conflict resolution circuit includes a simultaneous bank reference checking circuit for detecting conflicts between access requests by different vector processing units to the same memory bank within the respective section of the memory. The conflicting requests are arranged according to priority determined on an alternating basis.

According to the present invention, there is provided a vector processing system for carrying out vector data processing including fetching vector data from a main memory, carrying out vector calculations, and storing vector data in said memory, the system comprising a plurality of vector processing units each for carrying out vector data processing for a portion of elements which are assigned to the vector processing unit among all elements of vector data, wherein said memory comprises a plurality of portions which are concurrently accessible at least by said vector processing units, wherein said vector data processing in said plurality of vector processing units is concurrently carried out, all said elements are ordered, and said vector data processing is carried out in said order of the elements;

characterised in that each of said vector processing units comprises:

address generating means for receiving information used to generate addresses of the elements of the vector data for all the vector processing units and for generating, based on the received information, said addresses of the elements of the vector data for all the vector processing units;

priority control means for receiving said addresses for all the vector processing units from said address generating means in each vector processing unit, and selecting as allowable an access to an address from among said addresses for all the vector processing units, based on a predetermined order of the elements of vector data; and

memory access signal outputting means for outputting a memory access signal including said address, for which said access is selected as allowable by said priority control means, to said memory; and in that said priority control means selects at most one access as allowable, from among at least said accesses for addresses which are requested by its own vector processing unit for each said portion of said memory, based on said addresses concurrently generated in said address generating means of said plurality of vector processing units, and said predetermined order of the elements, and then outputs one or more signals of the access which is selected as allowable, to said memory.

Thus, by means of the invention, all the address information which is requested from all portions of the vector processing apparatus for accesses to the main storage (main memory) is generated and collected in each of the vector processing units, and therefore, the priority control for the access for each element of vector data can be carried out without receiving status of the access to the main storage from the other vector processing units. In addition, there is no limit to the timing for access to the main storage for each vector processing unit except the above priority control. Namely, the aforementioned causes for delay in access to the main storage in the existing type vector processing apparatus can be mitigated or eliminated.

Further, each of the above vector processing units comprises a vector register and an indirect addressing controller. The vector register temporarily holds address data which has been read out from the main storage, and is to be used for address generation in the address generators in all of the plurality of vector processing units. The indirect addressing controller controls reading operations of the above address data in the above vector register, and supplies the address data to all of the plurality of vector processing units, when an indirect addressing mode is instructed from the above vector processing controller. The address generator generates addresses for vector processing of all the elements using the above address data from the above vector registers in all of the plurality of vector processing units, when the indirect addressing mode is instructed from the above vector processing controller. Thus, all the address data needed for indirect addressing read out from the main storage to the vector register in each of the vector processing units are supplied to the address generators in all of the vector processing units, and therefore, the address generator in each vector processing unit can generate all the addresses for access to the main storage from all the vector processing units in the indirect addressing.

Reference is made, by way of example, to the accompanying drawings, in which:-

Figure 1 shows an outline of the construction of an example of an existing vector processing apparatus having a plurality of vector processing units;

Figure 2 shows predetermined alternative accessible timings which are respectively assigned for the (4m)-th and (4m+1)-th elements in the vector processing unit 2, and the (4m+2)-th and (4m+3)-th elements in the vector processing unit 3 in the construction of Fig. 1;

Figure 3 shows an outline of the construction of a first embodiment of the present invention;

Figure 4 shows an outline of the construction of a second embodiment of the present invention;

Figures 5 and 6 show constructions of the vector processing units 41 and 42;

Figures 7 and 8 respectively show constructions of the priority control circuits 100 and 100' in Figs. 5 and 6;

Figure 9 shows a construction for the busy check circuits 111-114 and 111'-114' in the construction of Figs. 7 and 8;

Figure 10 shows a construction for the FF setting circuits 121 and 121' in the construction of Figs. 7 and 8; and

Figure 11 shows a detailed construction for the delay circuits 101 and 101' and the related construction of the priority control portions 72 and 72' in the construction of Figs. 5 and 6.

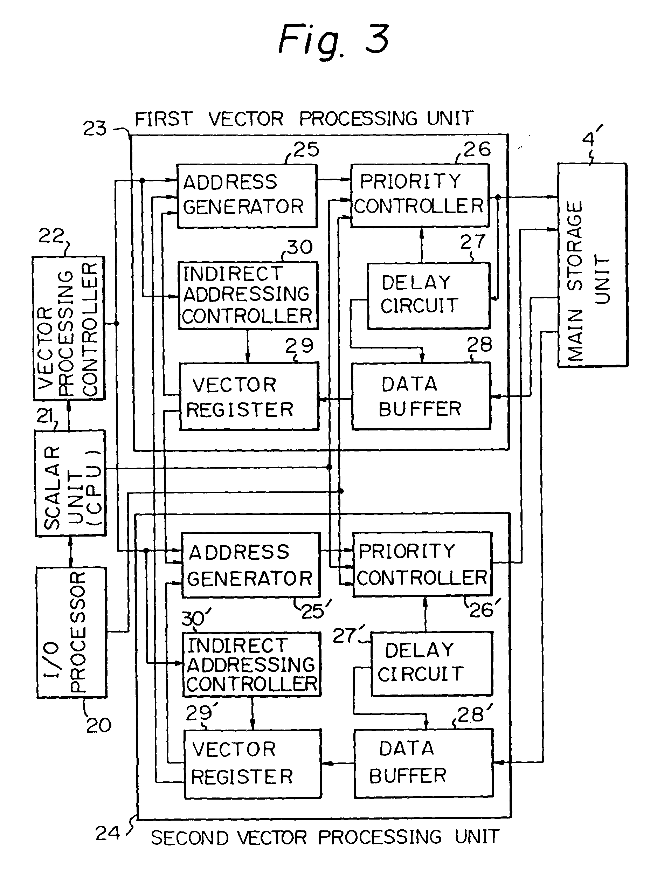

Figure 3 shows an outline of the construction of a first embodiment of the present invention.

In Fig. 3, reference numeral 20 denotes an input and output processor (IOP), 21 denotes a scalar unit (CPU), 22 denotes a vector processing controller, 23 denotes a first vector processing unit, 24 denotes a second vector processing unit, 25 and 25' each denote an address generator, 26 and 26' each denote a priority controller, 27 and 27' each denote a delay circuit, 28 and 28' each denote a data buffer, 29 and 29' each denote a vector register, 30 and 30' each denote an indirect addressing controller, and 4' denotes a main storage.

The input and output processor (IOP) 20 controls data transfer between the main storage 4' and input/output devices which are provided in the computer systems having a vector processing apparatus embodying the present invention.

The scalar unit (CPU) 21 is a central processing unit of the computer system. The scalar unit (CPU) 21 fetches instructions and data from the main storage 4', executes instructions other than vector instructions, and transfers vector instructions to the vector processing controller 22.

When the vector processing controller 22 receives a vector instruction from a scalar unit (CPU) 21, as the vector processing controller 1 in Fig. 1, the vector processing controller 22 supplies control data including a start signal, an operation code (which defines the action to be performed, e.g., writing or reading), a leading address (LA, an address of a top element of vector data), a distance (a distance between addresses of successive elements), and a vector length (the number of elements in a vector data), etc., to the first and second vector processing units 23 and 24, based on the vector instruction.

The vector processing units 23 and 24 each carry out vector data processing for half of elements among all elements of vector data, and the vector data processing in the vector processing units 23 and 24 is concurrently carried out. The vector data processing is carried out in the order of the elements, i. e., from the element 0 to the element n-1 when the vector length is n.

The address generator 25 in the vector processing unit 23 concurrently generates addresses for accesses to the main storage 4' for elements which are concurrently requested by both the vector processing units 23 and 24.

Similarly, the address generator 25' in the vector processing unit 24 concurrently generates addresses for accesses to the main storage 4' for the elements which are concurrently requested by both the vector processing units 23 and 24. The addresses concurrently generated in both the address generators 25 and 25' are the same.

As the main storage 4 in Fig. 1, the main storage 4'

comprises a plurality of memory units (or banks) which are concurrently accessible from the vector processing units 23 and 24, the scalar unit (CPU) 21, and the input and output processor 20.

The priority controller 26 determines at most one access as allowable, among the accesses which are concurrently requested by the vector processing units 23 and 24, an access requested by the central processing unit 21, and an access requested by the input and output processor 20, for each of the memory units (or banks) of the main storage 4', based on the addresses concurrently generated in the address generator 25, an address in the access requested by the central processing unit 21, an address in the access requested by the input and output processor, and the order of the elements. Then, priority controller 26 outputs one or more signals for the accesses which are requested by its own vector processing unit 23, and are determined as allowable, to the main storage 4'.

Similarly, the priority controller 26' determines at most one access as allowable, among the accesses which are concurrently requested by the vector processing units 23 and 24, an access requested by the central processing unit 21, and an access requested by the input and output processor 20, for each of the memory units (or banks) of the main storage 4', based on the addresses concurrently generated in the address generator 25, an address in the access requested by the central processing unit 21, an address in the access requested by the input and output processor 20, and the order of the elements. Then, priority controller 26 outputs one or more signals for the accesses which are requested by its own vector processing unit 23, and are determined as allowable, to the main storage 4'.

If the addresses which are concurrently requested by the vector processing units 23 and 24, the central processing unit 21, and the input and output processor 20 are in different memory units (or banks), there is no competition between these requests, and therefore, all these requests are determined to be allowable, and signals for all the accesses requested in each vector processing unit are then transferred to the main storage 4' from each vector processing unit.

If two addresses which are concurrently requested for access from any of the vector processing units 23 and 24, the central processing unit 21, and the input and output processor 20, are in the same memory unit (or bank), the priority to access the main storage 4' is given in the following order: the highest priority access is given to the input and output processor 20; the second highest priority access is given to the central processing unit 21; the next highest priority is given to the access for the element in the highest order (for example, the element A(i) designated by the smallest number i) among the requested accesses; ... ; and thus, the lowest priority access is given to the element in the lowest order (for example, the element A(j) designated by the largest number j) among the requested accesses.

Although not shown in Fig. 3, the priority controllers 26 and 26' each contain a plurality of flag registers for holding and indicating a busy status of respective portions of the main storage 4', i. e., the same set of flag registers for holding and indicating a busy status of respective portions of the main storage 4' are provided in both the priority controllers 26 and 26' in vector processing units 23 and 24. Each of the priority controllers 26 and 26' sets one or more corresponding flag registers in its own priority controller when determining one or more accesses as allowable, and resets each flag register a first predetermined time after the setting of the flag register. The first predetermined time corresponds to a time each memory unit (or bank) is occupied for an access, or a time an access route to each memory unit (or bank) is occupied for an access.

The above first predetermined time is generated by the delay circuits 27 and 27' in vector processing units 23 and 24. The delay circuits 27 and 27' input corresponding address information when any one of the flag registers is set, and output the address information the first predetermined time after the input, and the outputs of the delay circuits 27 and 27' are each decoded in a decoder (not shown in Fig. 3), and the output bits of the decoder are applied to the above plurality of flag registers as reset signals.

The vector registers 29 and 29' are each provided for temporarily holding data which is read out from the main storage 4', until each data is read out from the vector registers 29 and 29' for respective parts of a vector calculation.

The data buffer circuits 28 and 28' each temporarily hold the data which is read out from the main storage 4', before inputting the data into the corresponding vector registers 29 and 29'.

Each delay circuit 27 and 27' inputs corresponding address information when an access among the accesses requested by its own vector processing unit is determined as allowable, and then outputs the address information to the corresponding data buffer circuits 28 and 28' to provide a timing of the input of the data into the corresponding vector registers 29 and 29', a second predetermined time after the above input of the address information. In each of the vector processing units 23 and 24, data which is fetched from the main storage 4' is once written in the vector register 29 or 29' through the buffer register 28 or 28', and then the data is read out for vector calculation (the constructions for the vector calculation in the vector processing units are not shown). Data obtained by the vector calculation in each vector processing unit 23 or 24 is also once held in the vector register 29 or 29' before being stored in the main storage 4'.

The above second predetermined time is also generated by the delay circuits 27 and 27' in vector processing units 23 and 24. The delay circuits 27 and 27' are each constructed by a shift register having a plurality of stages. In each cycle, address information held in each stage is shifted to a next stage, and the delays of the above first and second predetermined times are obtained from different stages in the shift register.

In addition, in each of the vector processing units 23 and 24, the vector register 29 or 29′ temporarily holds address data for indirect addressing, which has been read out from the main storage 4′ as well as the vector data for the vector calculation, and the address data is supplied for generating effective addresses in the indirect addressing in the address generators 25 and 25′ in both the vector processing units 23 and 24.

The indirect addressing controller 30 or 30′ controls reading operations of the address data in the vector register 29 or 29′ in its own vector processing unit 23 or 24, and controls the supply of the address data to both the vector processing units 23 and 24, when an indirect addressing mode is instructed from the vector processing controller 22.

The address generator 25 or 25′ in each vector processing unit 23 or 24 generates effective addresses for vector processing of all the elements using the above address data supplied from the vector registers 29 and 29′ in both the vector processing units 23 and 24, when the indirect addressing mode is instructed from the vector processing controller 22.

Namely, when indirect addressing is instructed from the vector processing controller 22, address data for the indirect addressing for the above part of elements is read out from the main storage 4′ by each vector processing unit, and is temporarily held in a vector register in each vector processing unit, and the address data held in the vector register in each vector processing unit, is supplied to the address generators 25 and 25′ in both the vector processing units 23 and 24.

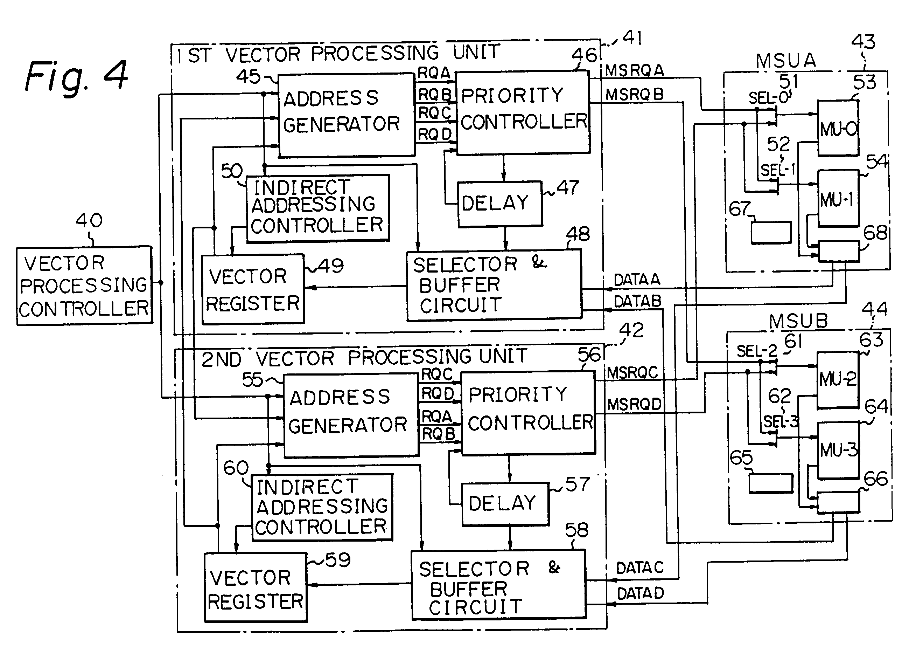

Figure 4 shows a second embodiment of the present invention.

The construction of the vector processing apparatus shown in Fig. 4 is an example of the above-mentioned construction of the vector processing apparatus shown in Fig. 3.

In Fig. 4, reference numeral 40 denotes a vector processing controller, 41 denotes a first vector processing unit, 42 denotes a second vector processing unit, 45 and 55 each denote an address generator, 46 and 56 each denote a priority controller, 47 and 57 each denote a delay circuit, 48 and 58 each denote a data buffer, 49 and 59 each denote a vector register, 50 and 60 each denote an indirect addressing controller, 43 and 44 each denote the main storage unit A and the main storage unit B, 51, 52, 61, and 62 each denote a selector, 53, 54, 63, and 64 each denote a memory unit, 65 and 67 each denote a memory control circuit, and 66 and 68 each denote an input/output circuit.

The vector processing apparatus comprises first and second vector processing units 41 and 42, the first vector processing unit 41 carries out vector processing of the (4m)-th and (4m+1)-th elements, and the second vector processing unit 42 carries out vector processing of the (4m+2)-th and (4m+3)-th elements. Namely, the first vector processing unit 41 accesses the main storage units A 43 and B 44 for the (4m)-th and (4m+1)-th elements, and the second vector processing unit 42 accesses the main storage units A 43 and B 44 for the (4m+2)-th and (4m+3)-th elements.

In the construction of Fig. 4, two main storage units 43 and 44 are provided, and data of the (4m)-th and the (4m+2)-th elements are stored in the main storage unit A 43, and data of the (4m+1)-th and the (4m+3)-th elements are stored in the main storage unit B 44.

In the main storage unit A 43, signals MSRQA for accessing the main storage unit A 43 for the (4m)-th elements from the vector processing unit 41, and signals MSRQC for accessing the main storage unit A 43 for the (4m+2)-th elements from the vector processing unit 42 are applied to the memory unit 53 through the selector 51, and to the memory unit 54 through the selector 52. In the main storage unit B 44, signals MSRQB for accessing the main storage unit B 44 for the (4m+1)-th elements from the vector processing unit 41, and signals MSRQD for accessing the main storage unit B 44 for the (4m+3) th elements from the vector processing unit 42 are applied to the memory unit 63 through the selector 61, and to the memory unit 64 through the selector 62.

Although not shown, each of the memory units 53, 54, 63, and 64 comprises thirty-two banks, and each bank can be concurrently accessed. The access to these banks is controlled by the memory control circuit 67 in the main storage unit A 43, and by the memory control circuit 65 in the main storage unit B 44, based on address information which is included in the above signals MSRQA, MSRQB, MSRQC, and MSRQD. Although not shown, each of the memory units 53, 54, 63, and 64 further comprises a demultiplexer for delivering the above signals MSRQA, MSRQC, MSRQB and MSRQD from the selectors 51 and 52, or 61 and 62 to an objective bank in each cycle. The memory control circuit 67 or 65 controls the demultiplexer. Further, input/output data of the banks in each main storage unit 43 or 44 is selected at the input/output circuit 68 or 66 under the control of the memory control circuit.

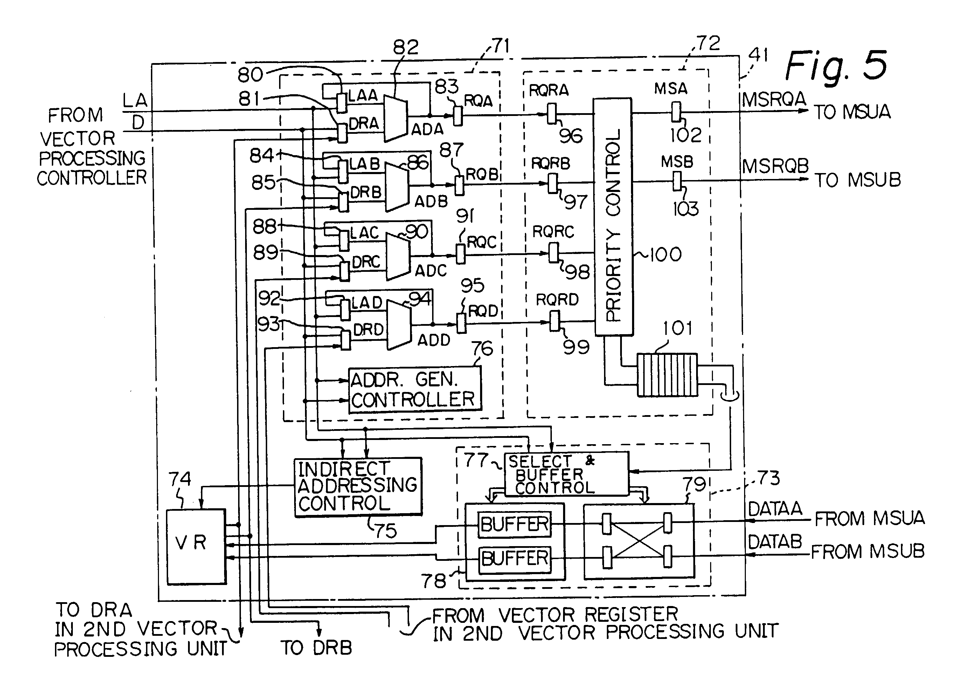

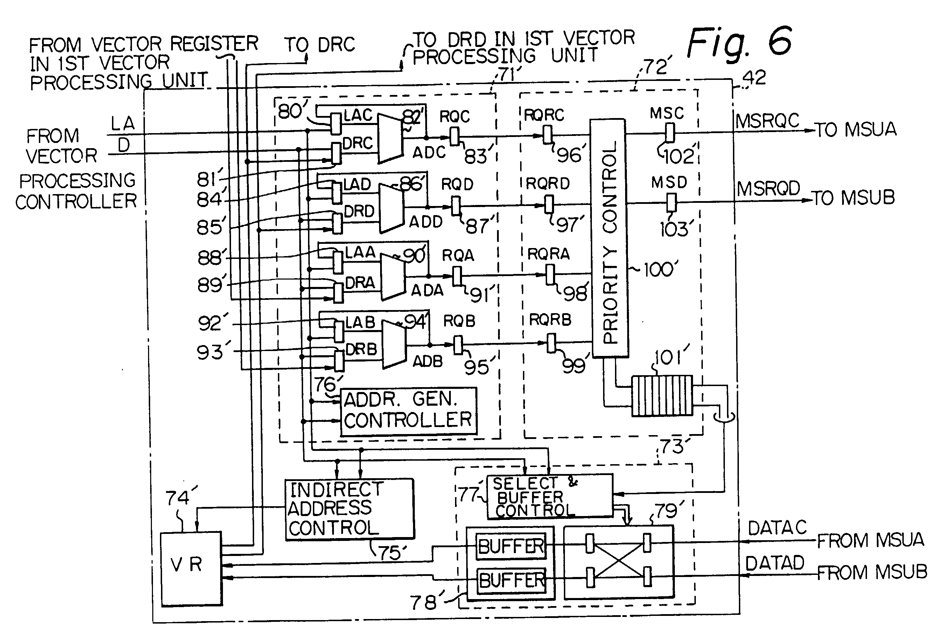

Figures 5 and 6 show constructions of the vector processing units 41 and 43.

In Fig. 5, reference numeral 71 denotes an address generator, 72 denotes a priority controller, 73 denotes a data selector & buffer circuit, 74 denotes a vector register, 75 denotes an indirect addressing controller, 76 denotes an address generating controller, 77 denotes a selector & buffer control circuit, 78 denotes a buffer circuit, 79 denotes a matrix circuit, 80, 81, 84, 85, 88, 89, 92, and 93 each denote a register, 82, 86, 90, and 94 each denote an adder, 83, 87, 91, 95, 96, 97, 98, 99, 102, and 103 each denote a register for holding the aforementioned signals MSRQA, MSRQB, MSRQC, and MSRQD for accessing the main storage units, 100 denotes a priority control circuit, 101 denotes a delay circuit.

When a start signal, an operation code (which defines the action to be performed, e.g., writing or reading), a leading address (LA, an address of a top element of vector data), a distance (a distance between addresses of successive elements), and a vector length (the number of elements in a vector data), are given from the vector processing controller 40, the leading address is held in the registers 80, 84, 88, and 92. A 0 value is held in the register 81, the distance value is held in the register 85, a value equal to two times the distance value is held in the register 89, and a value equal to three times the distance value is held in the register 93, at the first cycle. At the next cycle, and the later cycles, the distance value is held in the registers 81, 85, 89, and 93.

Then, the sums of the outputs of the pairs of the registers 80 and 81, 84 and 85, 88 and 89, and 92 and 93, are respectively calculated in the adders 82, 86, 90, and 94. The adders 82, 86, 90, and 94 each output an effective address for accessing the main storage units for the (4m)-th, (4m+1)-th, (4m+2)-th and (4m+3)-th elements, and these effective addresses are each held in the registers 83, 87, 91, and 95, respectively, together with the operation code. All the above operations are controlled by the address generating controller 76.

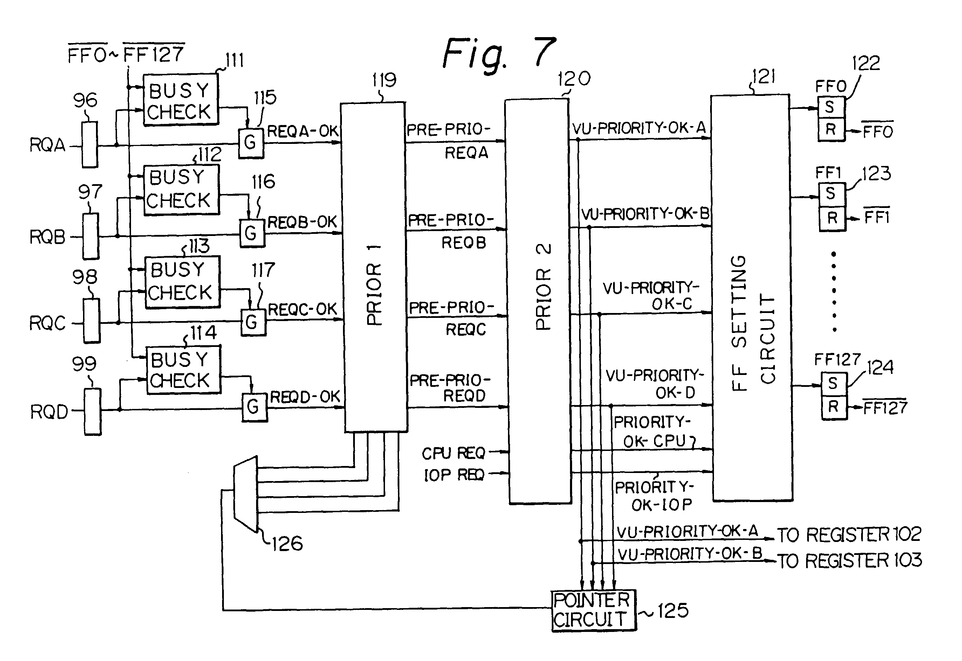

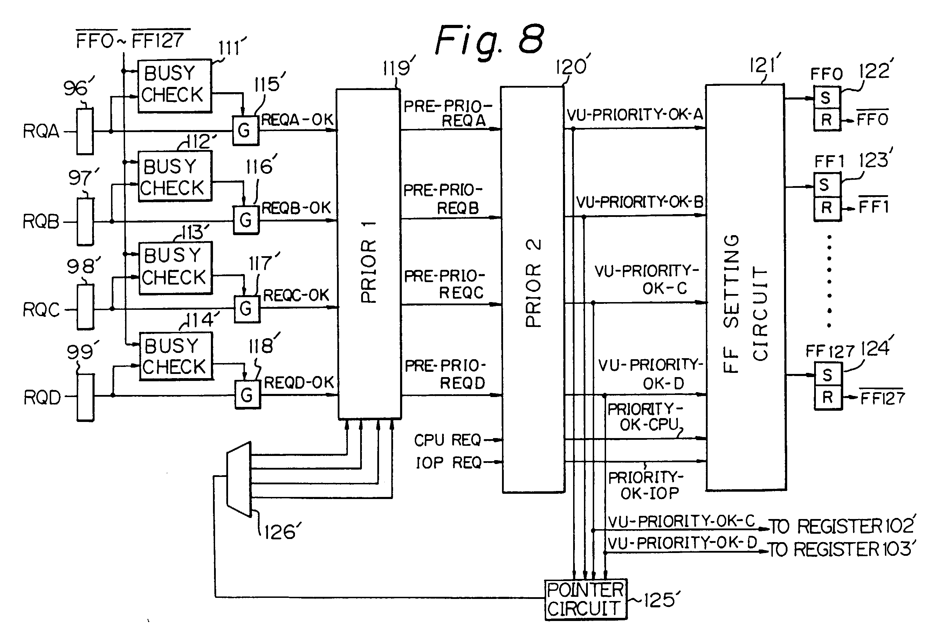

Figures 7 and 8 respectively show constructions of the priority control circuits 100 and 100' in Figs. 5 and 6.

In Fig. 7, registers 96, 97, 98, 99 are the same as shown in Fig. 5, and the outputs of the registers 83, 87, 91, and 99 are each held in the corresponding registers 96, 97, 98, and 98, respectively. In Fig. 7, reference numerals 111, 112, 113, and 114 each denote a busy check circuit, 115, 116, 117, and 118 each denote a gate circuit, 119 denotes a first priority control portion, 120 denotes a second priority control portion, 121 denotes an FF setting circuit, 122, 123, ... 124 each denote an RS-type flip-flop circuit, 125 denotes a pointer circuit, and 126 denotes a decoder.

The RS-type flip-flop circuits 122, 123, ... 124 corresponds to the plurality of busy flag registers explained in the first embodiment, and are provided for each bank in the memory units 53, 54, 63, and 64, for indicating whether or not each bank is occupied by an access operation.

Each of the busy check circuits 111, 112, 113, 114 determines whether or not a bank which is requested for an access for a corresponding element is busy, based on an effective address held in a corresponding register 96, 97, 98, or 99.

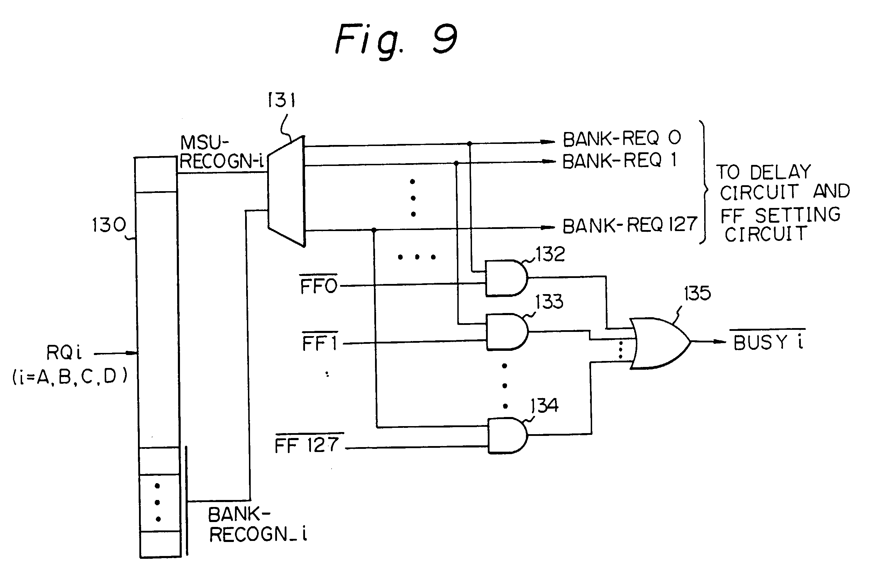

Figure 9 shows a construction for the busy check circuits 111-114 and 111'-114' in the construction of Figs. 7 and 8.

In Fig. 9, reference numeral 130 denotes a register, 131 denotes a decoder, 132 to 134 each denote an AND circuit, and 135 denotes an OR circuit.

The register 130 represents one of the registers 96, 97, 98, and 99 shown in Fig. 7, or the registers 96', 97', 98', and 99' shown in Fig. 8, and the input and the output of the register 130 is denoted by RQi, where RQi is RQA, RQB, RQC, or RQD. A bit indicating the main storage unit (43 or 44) among the address bits of the RQi, which is denoted by MSU-RECOGN-i, and a portion indicating an objective bank among the address bits of the RQi, which is denoted by BANK-RECOGN-i, are input in parallel into the decoder 131. Each output BANK-REQ 0, BANK-REQ 1, ... BANK-REQ 127 (which corresponds to a total of 128 banks in four memory units 53, 54, 63, and 64) of the decoder 131 indicates whether or not the corresponding request for the access is requesting an address in each bank.

The above outputs BANK-REQ 0, BANK-REQ 1, ... BANK-REQ 127 are each input into one input terminal of a corresponding one of the AND circuits 132, 133, ... 134, where the AND circuits 132, 133, ... 134 are provided corresponding to the 128 banks. To the other input terminal of each of the AND circuits 132, 133, ... 134, a corresponding one of inverted outputs $\overline{FF0}$, $\overline{FF1}$, ... $\overline{FF127}$ of the RS-type flip-flop circuits 122, 123, ... 124, is input. The outputs of all the AND circuits 132, 133, ... 134 are input into the OR circuit 135, and thus, the output $\overline{BUSY}$ i of the OR circuit 135 indicates whether or not a bank for which access is requested for the corresponding element is busy.

The result of the busy check $\overline{BUSY}$ i, where i is A, B, C, or D, is applied to a corresponding gate circuit 115, 116, 117, or 118 as a control signal. When the bank requested for the access for the corresponding element is not busy, the output RQA, RQB, RQC, or RQD of the corresponding register 96, 97, 98, or 99 is applied to the first priority control portion 119 through a corresponding gate circuit 115, 116, 117, or 118, as a first-stage effective access signal REQA-OK, REQB-OK, REQC-OK, or REQD-OK.

The first priority control portion 119 allows one of the above first-stage effective access signal or signals REQA-OK, REQB-OK, REQC-OK, or REQD-OK to enter the second priority control portion 120 as a second-stage effective access signal PRE-PRIO-REQA, PRE-PRIO-REQB, PRE-PRIO-REQC, or PRE-PRIO-REQD, where the allowed signal is determined in the order of the elements. That is, one of the above effective signals corresponding to a next element (j+1) to the last element (j) for which an access to one of the main storage units has already been allowed, is selected based on information on the status of the former accesses, which information is obtained through the pointer circuit 125 and the decoder 126 as explained later.

The second priority control portion 120 determines the above second-stage effective access signal PRE-PRIO-REQA, PRE-PRIO-REQB, PRE-PRIO-REQC, PRE-PRIO-REQD as a final-stage effective access signal VU-PRIORITY-OK-A, VU-PRIORITY-OK-B, VU-PRIORITY-OK-C, or VU-PRIORITY-OK-D, and outputs the final-stage effective access signal to the FF setting circuit 121, when neither a request CPUREQ for access from the scalar unit (CPU), nor a request IOPREQ for access from the input and output processor (IOP) is active.

When a request for access from the input and output processor (IOP) is active, the above second priority control portion 120 determines and outputs the signal IOPREQ as a final-stage effective access signal PRIORITY-OK-IOP. When a request for access from the input and output processor (IOP) is not active, and a request CPUREQ for access from the scalar unit (CPU) is active, the above second priority control portion 120 determines and outputs the signal CPUREQ from the scalar unit (CPU) as a final-stage effective access signal PRIORITY-OK-CPU.

Only the outputs VU-PRIORITY-OK-A and VU-PRIORITY-OK-B (which correspond to MSRQA and MSRQB in Figs. 4 and 5) of the second priority control portion 120 corresponding to the requests from its own vector processing unit 41, are sent to an objective main storage unit through the registers 102 and 103, respectively.

The outputs of the second priority control portion 120 corresponding to the requests from the vector processing units 41 and 42 are input into the pointer circuit 125, and the pointer circuit 125 recognizes the status of the access to the main storage units 43 and 44 by the vector processing units 41 and 42. The output of the pointer circuit 125 is zero when an access last allowed in the second priority control portion 120 is for the (4m)-th element, the output is one when an access last allowed in the second priority control portion 120 is for the (4m+1)-th element, the output is two when an access last allowed in the second priority control portion 120 is for the (4m+2)-th element, and the output is three when an access last allowed in the second priority control portion 120 is for the (4m+3)-th element.

The above first and second priority control portions are each constructed by a hardware logic circuit.

The above output of the pointer circuit 125 is decoded in the decoder 126, and then supplied to the first priority control portion 119 as the aforementioned information on the status of the former accesses.

Although not shown in Fig. 7, the FF setting circuit 121 receives the aforementioned outputs BANK-REQ 0, BANK-REQ 1, ... BANK-REQ 127 of the decoders 131 (as shown in Fig. 9) in the busy check circuits 111, 112, 113, and 114, as well as the above outputs of the second priority control portion 121.

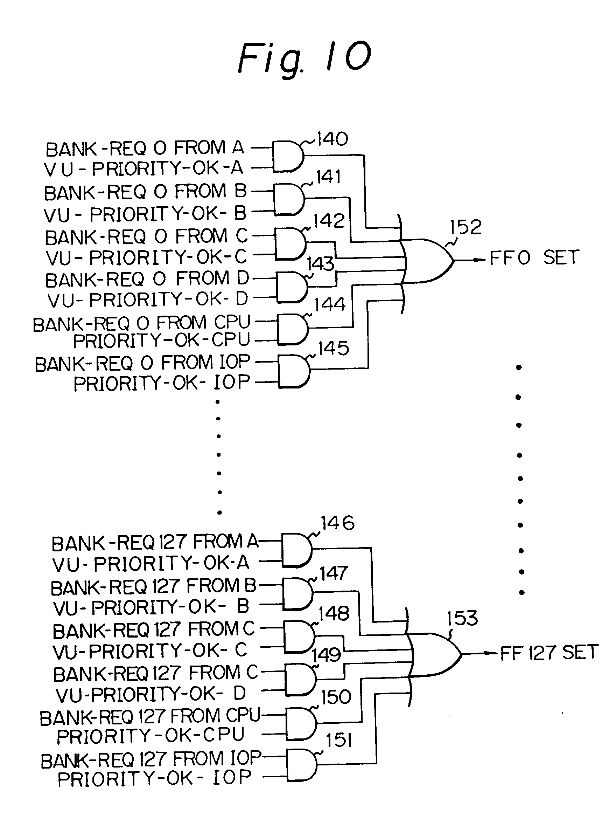

Figure 10 shows a construction for the FF setting circuits 121 and 121' in the construction of Figs. 7 and 8.

In Fig. 10, reference numerals 140 to 151 each denote an AND circuit, and 152 and 153 each denote an OR circuit. In addition, BANK-REQ k from A denotes the output signal of the decoder 131 in the busy check circuit 111, BANK-REQ k from B denotes the output signal of the decoder 131 in the busy check circuit 112, BANK-REQ k from C denotes the output signal of the decoder 131 in the busy check circuit 113, BANK-REQ k from D denotes the output signal of the decoder 131 in the busy check circuit 114, where k is 0, 1, ... 127 as shown in Fig. 9, BANK-REQ k from CPU denotes a signal which indicates whether or not an address requested from the scalar unit (CPU) is in the bank k, and BANK-REQ k from IOP denotes a signal which indicates whether or not an address requested from the input and output processor (IOP) is in the bank k. Both signals BANK-REQ k from CPU and BANK-REQ k from IOP each can be generated by a decoder (not shown).

The AND circuit 140 outputs a high level when both the above-mentioned signal BANK-REQ 0 from A and the aforementioned output VU-PRIORITY-OK-A of the second priority control portion 120 are active; the AND circuit 141 outputs a high level when both the above-mentioned signal BANK-REQ 0 from B and the aforementioned output VU-PRIORITY-OK-B of the second priority control portion 120 are active; the AND circuit 142 outputs a high level when both the above-mentioned signal BANK-REQ 0 from C and the aforementioned output VU-PRIORITY-OK-C of the second priority control portion 120 are active; the AND circuit 143 outputs a high level when both the above-mentioned signal BANK-REQ 0 from D and the aforementioned output VU-PRIORITY-OK-D of the second priority control portion 120 are active; the AND circuit 144 outputs a high level when both the above-mentioned signal BANK-REQ 0 from CPU and the aforementioned output PRIORITY-OK-CPU of the second priority control portion 120 are active; and the AND circuit 145 outputs a high level when both the above-mentioned signal BANK-REQ 0 from IOP and the aforementioned output PRIORITY-OK-IOP of the second priority control portion 120 are active.

The outputs of all the above AND circuits 140 to 145 are applied to an OR circuit 152. The output of the OR circuit 152 indicates whether or not a request for access to the bank 0 is requested by at least one of the vector processing units 43 and 44, the scalar unit (CPU), and the input and output processor (IOP), and the request is determined allowable by the first and second priority control portions 119 and 120, i. e., the bank 0 is accessed. The output of the OR circuit 152 is applied to the set terminal of the aforementioned RS-type flip-flop circuit 122 corresponding to the bank 0.

For the other banks 1 to 127, constructions each comprised of six AND circuits and an OR circuit similar to the above construction for the bank 0, and the outputs of the OR circuits are each applied to the set terminals of the aforementioned RS-type flip-flop circuits 123 to 124 corresponding to the banks 1 to 127, respectively.

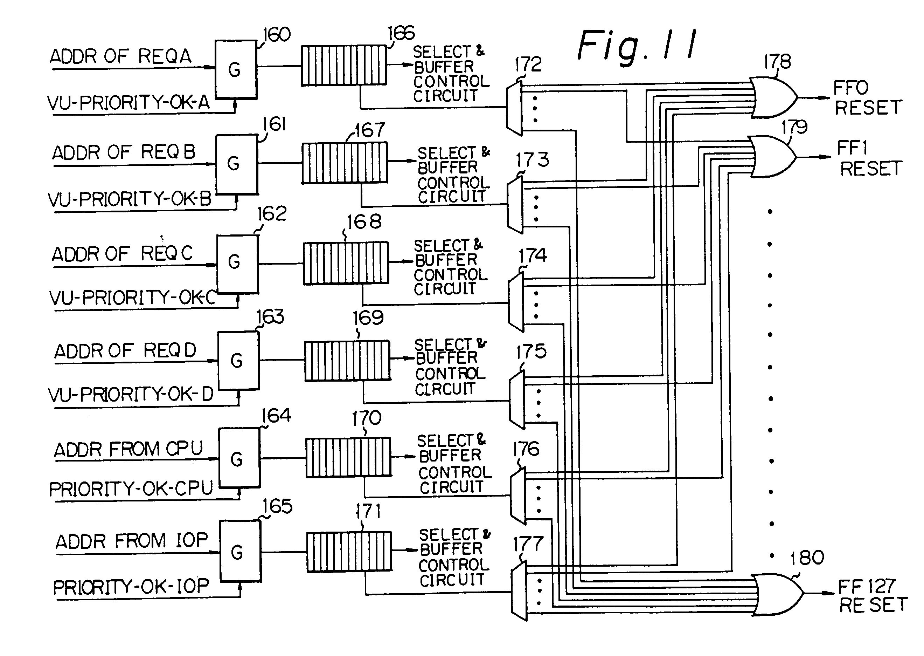

Figure 11 shows a detailed construction for the delay circuits 101 and 101' and the related construction of the priority control portions 72 and 72' in the construction of Figs. 5 and 6.

In Fig. 11, reference numerals 160 to 165 each denote a gate circuit, 166 to 171 each denote a shift register, 172 to 177 each denote a decoder, and 178 to 180 each denote an OR circuit.

The shift registers 166 to 171 are provided corresponding to the aforementioned requests RQA, RQB, RQC, RQD, and the requests from the scalar unit (CPU), and the input and output processor (IOP), respectively, and each of the shift registers 166 to 171 inputs a corresponding address in the above requests RQA, RQB, RQC, RQD, and the requests from the CPU, and the IOP through the corresponding gate circuit 160, 161, 162, 163, 164, or 165. The gate circuits 160 to 165 are each controlled by the aforementioned signals VU-PRIORITY-OK-A, VU-PRIORITY-OK.B, VU-PRIORITY-OK-C, VU-PRIORITY-OK-D, PRIORITY-OK-CPU, and PRIORITY-OK-IOP from the second priority control portion 120, respectively. Namely, only when a corresponding request is determined as allowed in the second priority control portion 120, is the above address input into the corresponding shift register.

In each cycle, the addresses input into the shift registers 166 to 171 are each shifted from one stage to a next stage, and the shift registers 166 to 171 each output the above address at the first and second stages. The outputs at the first stage, each havingbeen delayed by a first predetermined time through the corresponding shift register, are each input into a corresponding one of the decoders 172 to 177. Each of the decoders 172 to 177 functions the same as the decoder 131 in Fig. 9, i. e. each decoder has 128 outputs corresponding to the 128 banks in the main storage units 43 and 44, and each of the outputs indicates whether or not the address input into the decoder is in the bank.

The outputs of the decoders 166 to 171 corresponding to each bank are input into a corresponding one of the OR circuits 178 to 180, and the outputs of the OR circuits 178 to 180 are each applied to a reset terminal of the corresponding one of the RS-type flip-flop circuits 122 to 124 in Fig. 7. Thus, each of the RS-type flip-flop circuits 122 to 124 in Fig. 7 is reset a first predetermined time after its setting.

The outputs at the second stage, each having been delayed by a second predetermined time through the corresponding shift register, are supplied to the selector & buffer control circuit 77 in Fig. 5 for giving timings to the selector & buffer circuit 73 for controlling input and output operations and select operations of the corresponding data in the selector & buffer circuit 73, which data has been read out from the above address in the main storage units 43 and 44.

After the above-mentioned operations of the priority control, data DATA A and DATA B read out from the main storage units 43 and 44 for the request RQA and RQB are input into the selector & buffer circuit 73. The selector & buffer circuit 73 comprises a matrix circuit 79, a buffer circuit 78, and the selector & buffer control circuit 77. The matrix circuit 79 is provided for changing the routes of data which are input into the circuit 79 through two paths from the main storage units 43 and 44, and are output to two banks of the vector register 74 through the buffer circuit 78.

The buffer circuit 78 is provided for adjusting the input timing of the above data into the banks of the vector register 74 under the control of the above selector & buffer control circuit 77.

Although the above explanation was made only for the construction of Fig. 5 showing the vector processing unit 41 for carrying out vector processing for the (4m)-th and (4m+1)-th elements, in the construction of Fig. 6, the vector processing unit 42 for carrying out vector processing for the (4m+2)-th and (4m+3)-th elements, is similar to the above construction of Fig. 5, except that the vector processing unit 42 outputs access signals for the (4m+2)-th and (4m+3)-th elements only, and receives the corresponding data of the (4m+2)-th and (4m+3)-th elements. Correspondingly, the priority control circuit 100′ in the construction of Fig 8, outputs access signals for the (4m+2)-th and (4M+3)-th elements only.

The operation in an indirect addressing mode is basically the same as the operation in the first embodiment of the present invention.

Namely, the indirect addressing controllers 75 and 75′ each control reading operations of the address data in the vector register 74 or 74′ in its own vector processing unit 23 or 24, and control the supply of the address data from the vector register 74 or 74′ to both the vector processing units 41 and 42, when an indirect addressing mode is instructed from the vector processing controller 40.

The address generator 71 or 71′ in each vector processing unit 41 or 42 generates effective addresses for vector processing of all the elements using the above address data supplied from the vector registers 74 and 74′ in both the vector processing units 41 and 42, when the indirect addressing mode is instructed from the vector processing controller 40.

Namely, when an indirect addressing is instructed from the vector processing controller 40, address data for the indirect addressing for the (4m)-th and (4m+1)-th elements is read out from the main storage units 43 and 44 by the vector processing unit 41, and is temporarily held in a vector register 74 in the vector processing unit 41. On the other hand, address data for the indirect addressing for the (4m+2)-th and (4m+3)-th elements is read out from the main storage units 43 and 44 by the vector processing unit 42, and is temporarily held in a vector register 74′ in the vector processing unit 42. Then, the address data held in the vector register in each vector processing unit, is supplied to the address generators 71 and 71′ in both the vector processing units 41 and 42, e. g., to registers 81, 85, 89, and 93 in the address generator 71, and to the registers 81′, 85′, 89′, and 93′ in the address generator 71′.

Thus, by means of the present invention, all addresses requested regarding access to the main storage units are generated, and priority controlled, in each vector processing unit, even in an indirect addressing mode.

## Claims

1.  A vector processing system for carrying out vector data processing including fetching vector data from a main memory (43, 44), carrying out vector calculations, and storing vector data in said memory (43, 44), the system comprising a plurality of vector processing units (41, 42) each for carrying out vector data processing for a portion of elements which are assigned to the vector processing unit among all elements of vector data, wherein said memory (43, 44) comprises a plurality of portions which are concurrently accessible at least by said vector processing units (41, 42), wherein said vector data processing in said plurality of vector processing units (41, 42) is concurrently carried out, all said elements are ordered, and said vector data processing is carried out in said order of the elements;

    characterised in that each of said vector processing units (41, 42) comprises:
    address generating means (45, 55) for receiving information used to generate addresses of the elements of the vector data for all the vector processing units and for generating, based on the received information, said addresses of the elements of the vector data for all the vector processing units;
    priority control means (46, 56) for receiving said addresses for all the vector processing units (41, 42) from said address generating means in each vector processing unit, and selecting as allowable an access to an address from among said addresses for all the vector processing units, based on a predetermined order of the elements of vector data; and
    memory access signal outputting means for outputting a memory access signal including said address, for which said access is selected as allowable by said priority control means, to said memory (43, 44); and in that
    said priority control means (46, 56) selects at most one access as allowable, from among at least said accesses for addresses which are requested by its own vector processing unit for each said portion of said memory, based on said addresses concurrently generated in said address generating means of said plurality of vector processing units, and said predetermined order of the elements, and then outputs one or more signals of the access which is selected as allowable, to said memory.

2.  A system according to claim 1, wherein said priority control means (46, 56) further comprises:-

    previous access time memorizing means (122-124) for indicating a memory busy state for a predetermined duration of time after a time that a previous access is selected as allowable; and
    means (111-119) for selecting said access as allowable only when said previous access time memorizing means does not indicate said memory busy state.

3.  A system according to claim 1, wherein said priority control means (46, 56) further comprises:-

    a plurality of previous access time memorizing means (122-124), provided for each of a plurality of ranges of the addresses of the elements, for indicating a memory busy state of the corresponding range for a predetermined duration of time after a time that a previous access for an address in the corresponding range is selected as allowable;
    means (119,126,125) for selecting an access for an address, among said addresses for all vector processing units, as an allowable candidate, based on a predetermined order of the elements of the vector data;
    address range determining means (131) for determining to which of said plurality of ranges said address, selected as the allowable candidate, belongs; and
    means (132-135) for selecting said access as allowable only when said previous access time memorizing means, corresponding to the range determined by said address range determining means, does not indicate said memory busy state.

4.  A system according to claim 1, wherein said priority control means (46, 56) further comprises:-

    last-allowed element indicating means (125) for indicating an element for which the memory access signal was last output; and
    means (119,126) for selecting a next allowable access based on the indication of said last-allowed element indicating means.

5.  A system according to claim 1, further comprising:-

    information supplying means (40) for receiving a vector instruction including said information, and simultaneously supplying the information to said plurality of address generating means.

6.  A system according to claim 1, wherein said priority control means (46, 56) further comprises:-

    a plurality of flag registers (122, 123, 124) for holding corresponding busy status indications of respective portions of said memory; and

means (121) for setting one or more corresponding flag registers when selecting one or more accesses as allowable, and means (160-180) for resetting each flag register after a first predetermined time after setting thereof has elapsed.

7. A system according to claim 6, wherein each of said vector processing units (41, 42) further comprises:-

a decoder (172 to 177);
a delay circuit (47, 57) for inputting, when setting any one of said flag registers, the address generated in said priority control means corresponding to the set flag register, and outputting said address to said decoder after said first predetermined time has elapsed; and
said decoder decoding said output of said delay circuit and applying the decoded results as reset signals to said resetting means for resetting said plurality of flag registers (122, 123, 124).

8. A system according to claim 1, wherein each of said vector processing units (41, 42) further comprises:-

a vector register (49, 59) for temporarily holding data, which is transferred from a data buffer circuit (48, 58) in the vector processing unit, until the data is read out for a vector calculation;
said data buffer circuit (48, 58) temporarily holding said data, which is read out from the memory, before inputting the data into said vector register; and
a delay circuit (47, 57) for inputting, when an access among said accesses requested by its own vector processing unit is selected as allowable, the address output by said memory access signal outputting means and for outputting said address to said data buffer circuit for controlling the timing of said input of the data into said vector register, a second predetermined time after the input of said address.

9. A system according to claim 1, further including a central processing unit (21) and an input/output processor (20), each producing access requests, wherein:-

said priority control means (46, 56) selects one or more accesses as allowable, from among accesses for addresses which are requested by its own vector processing unit, an access requested by said central processing unit, and an access requested by said input/output processor, based on said addresses concurrently generated in said address generating means of said plurality of vector processing units, and said plurality of vector processing units, and said predetermined order of the elements, and then outputs one or more signals of the access which is selected as allowable, to said memory.

10. A system according to claim 9, wherein:-

said portions of said memory (43, 44) are also accessible by said central processing unit and said input/output processor; and
said priority control means (46, 56) selects the or each said allowable access for each portion of said memory, based on said addresses concurrently generated in said address generating means of said plurality of vector processing units, said predetermined order of the elements, an address in said access requested by said central processing unit and an address in said access requested by said input/output processor.

11. A system according to claim 10, wherein said priority control means (46, 56) further comprises:-

a plurality of flag registers (122, 123, 124) for holding corresponding busy status indications of respective portions of said memory; and
means (121) for setting one or more corresponding flag registers when selecting one or more accesses as allowable, and means (160-180) for resetting each flag register after a first predetermined time after setting thereof has elapsed.

12. A system according to claim 11, wherein each of said vector processing units (41, 42) further comprises:-

a decoder (172 to 177);
a delay circuit (47, 57) for inputting, when setting any one of said flag registers (122, 123, 124), the address generated in said priority control means (46, 56) corresponding to the set flag register and for outputting said address to said decoder after said first predetermined time has elapsed; and
said decoder (172 to 177) decoding said output of said delay circuit (47, 57) and applying the decoded results as reset signals to said resetting means for resetting said plurality of flag registers.

13. A system according to claim 9, wherein each of said vector processing units (41, 42) further comprises:-

a vector register (49, 59) for temporarily holding data, which is transferred from a data buffer circuit (48,58) in the vector processing unit, until the data is read out for a vector calculation;

said data buffer circuit (48, 58) temporarily holding said data, which is read out from the memory, before inputting the data into said vector register; and

a delay circuit (47, 57) for inputting, when an access among said accesses requested by its own vector processing unit is selected as allowable, the address output by said memory access signal outputting means, and for outputting said address to said data buffer circuit for controlling the timing of said input of the data into said vector register, a second predetermined time after the input of said address.

14. A system according to claim 1, further including a memory access controller generating an indirect addressing mode instruction, wherein each of said vector processing units further comprises:-

a vector register (49, 59) for temporarily holding indirect address data for an indirect addressing of said portion of elements assigned to the vector processing unit, where said address data has been read out from said memory, and for supplying the indirect address data for generating effective addresses of the indirect addressing for all the elements of the vector data in said address generating means in all the vector processing units; and

an indirect addressing controller (50, 60) for controlling reading operations of said indirect address data in said vector register, and for controlling the supply of the address data for all the vector processing units, when an indirect addressing mode is generated by said memory access controller;

said address generating means (45, 55) generating said effective addresses for accessing all the elements using said indirect address data supplied from said vector register in all the vector processing units, when said indirect addressing mode is generated by said memory access controller.

15. A system according to claim 1, wherein said priority control means (46, 56) further comprises:-

a plurality of flag registers (122, 123, 124) for holding corresponding busy status indications of respective portions of said memory (43, 44); and

means (121) for setting one or more corresponding flag registers when selecting one or more accesses as allowable, and means (160-180) for resetting each flag register after a first predetermined time after setting thereof has elapsed.

16. A system according to claim 15, wherein each of said vector processing units (41, 42) further comprises:-

a decoder (172 to 177);

a delay circuit (47, 57) for inputting, when setting any one of said flag registers, the address generated in said priority control means corresponding to the set flag register and for outputting said address to said decoder after said first predetermined time has elapsed; and

said decoder (172 to 177) decoding said output of said delay circuit and applying the decoded results as reset signals to said resetting means for resetting said plurality of flag registers.

17. A system according to claim 14, wherein:-

said vector register in each of said vector processing units temporarily holds data which is read out from the memory, as well as said indirect address data, until the data is read out for a vector calculation; and

each of said vector processing units (41, 42) further comprises:-

a data buffer circuit (48, 58) for inputting the data into said vector register; and

a delay circuit (47, 57) for inputting, when an access among said accesses requested by its own vector processing unit is selected as allowable, the address generated by said priority control means, and outputting said address to said data buffer circuit for controlling the timing of said input of the data into said vector register, a second predetermined time after the input of said address.

18. A system according to claim 14, further including a central processing unit (21) and an input/output processor (20), each producing access requests, wherein:-

said priority control means (46, 56) selects one or more accesses as allowable from among said accesses for addresses which are requested by its own vector processing unit, an access requested by said central processing unit and an access requested by said input/output processor, based on said addresses concurrently generated in said address generating means of said vector processing units, and said predetermined order of the elements, and then outputs one or more signals of the access which is selected as allowable, to said memory.

19. A system according to claim 18, wherein:-

said portions of said memory (43, 44) are also concurrently accessible from said central processing unit and said input/output processor; and

said priority control means (46, 56) selects said allowable access from among accesses for addresses which are requested by its own vector processing unit, an access requested by said central processing unit and an access requested by said input/output processor, for each said portion of said memory, based on said addresses concurrently generated in said address generating means of said vector processing units, said order of the elements, an address in said access requested by the central processing unit and an address in said access requested by the input/output processor.

20. A system according to claim 19, wherein said priority control means (46, 56) comprises:-

a plurality of flag registers (122, 123, 124) for holding corresponding busy status indications of respective portions of said memory; and means (121) for setting one or more corresponding flag registers when selecting one or more accesses as allowable and means (160-180) for resetting each flag register after a first predetermined time after setting thereof has elapsed.

21. A system according to claim 20, wherein each of said vector processing units further comprises:-

a decoder (172 to 177); a delay circuit (47, 57) for inputting, when setting any one of said flag registers, the address generated in said priority control means corresponding to the set flag register and outputting said address to said decoder after said first predetermined time has elapsed; and said decoder decoding said output of said delay circuit and applying the decoded results as reset signals to said resetting means for resetting said plurality of flag registers.

22. A system according to claim 18, wherein:-

said vector register (49, 59) in each of said vector processing units temporarily holds data, which is transferred from a data buffer circuit (48,58) in the vector processing unit, until the data is read out for a vector calculation; and each of said vector processing units (41, 42) further comprises:- a data buffer circuit (48, 58) for temporarily holding said data, which is read out from the memory, before inputting the data into said vector register (49, 59); and

a delay circuit (47, 57) for inputting, when an access among said accesses requested by its own vector processing unit is selected as allowable, the address output by said memory access signal outputting means and for outputting said address to said data buffer circuit, for controlling the timing of said input of the data into said vector register, after a second predetermined time after the input of said address has elapsed.

**Patentansprüche**

1. Vektorverarbeitungssystem zur Durchführung einer Vektordatenverarbeitung, bei dem Vektordaten aus einem Hauptspeicher (43, 44) herausgegriffen werden, Vektorberechnungen durchführt werden und Vektordaten in den genannten Speicher (43, 44) eingespeichert werden, wobei das System eine Vielzahl von Vektorverarbeitungseinheiten (41, 42) enthält, die je zur Durchführung einer Vektordatenverarbeitung für einen Teil von Elementen dienen, die einer Vektorverarbeitungseinheit unter allen Elementen der Vektordaten zugeordnet sind, wobei der genannte Speicher (43, 44) eine Vielzahl von Abschnitten umfaßt, die gleichzeitig wenigstens durch die Vektorverarbeitungseinheiten (41, 42) zugreifbar sind, und wobei die Vektordatenverarbeitung in der genannten Vielzahl von Vektorverarbeitungseinheiten (41, 42) gleichzeitig durchgeführt wird, alle die genannten Elemente in eine Reihenfolge gebracht werden und die Vektordatenverarbeitung in der Reihenfolge der Elemente durchgeführt wird,

dadurch **gekennzeichnet**, daß jede der Vektorverarbeitungseinheiten (41, 42) folgendes aufweist:
eine Adressengenerierungseinrichtung (45, 55) zum Empfangen von Informationen, die dazu verwendet werden, um Adressen von Elementen der Vektordaten für alle die Vektorverarbeitungseinheiten zu erzeugen und um auf der Grundlage der empfangenen Informationen die Adressen der Elemente der Vektordaten für alle die Vektorverarbeitungseinheiten zu erzeugen,
eine Prioritätsteuereinrichtung (46, 56) zum Empfangen der Adressen für all die Vektorverarbeitungseinheiten (41, 42) von der Adressengenerierungseinrichtung in jeder Vektorverarbeitungseinheit, und um einen Zugriff für eine Adresse unter den Adressen für all die Vektorverarbeitungseinheiten als zulässig auszuwählen, basierend auf einer vorbestimmten Reihenfolge der Elemente der Vektordaten, und eine Ausgabeeinrichtung für ein Speicherzugriffssignal zum Ausgeben eines Speicherzugriffssignals, welches die genannte Adresse enthält, für die ein Zugriff als zulässig durch die Prioritätsteuereinrichtung ausgewählt wurde, an den genannten Speicher (43, 44), und daß die Prioritätsteuereinrichtung (46, 56) höchstens einen Zugriff aus wenigstens den genannten Zugriffen für Adressen als zulässig auswählt, die durch ihre eigene Vektorverarbeitungseinheit für jeden Abschnitt des genannten Speichers angefragt werden, und zwar basierend auf den Adressen, die gleichzeitig in der Adressengenerierungseinrichtung der Vielzahl der Vektorverarbeitungseinheiten erzeugt werden und basierend auf der vorbestimmten Reihenfolge der Elemente, und die dann ein oder mehrere Signale des Zugriffs, der als zulässig ausgewählt wurde, an den genannten Speicher ausgibt.

2. System nach Anspruch 1, bei dem die Prioritätsteuereinrichtung (46, 56) ferner folgendes aufweist:

eine Merkeinrichtung (122-124) für eine frühere Zugriffszeit, um einen Zustand gemäß einer Speicherbelegung für eine vorbestimmte Zeitdauer anzuzeigen, und zwar nach einem Zeitpunkt, nach dem ein früherer Zugriff als zulässig ausgewählt wurde, und eine Einrichtung (111-119) zum Auswählen des genannten Zugriffs als zulässig nur dann, wenn die Merkeinrichtung für die frühere Zugriffszeit keinen Zustand entsprechend einer Speicherbelegung anzeigt.

3. System nach Anspruch 1, bei dem die Prioritätsteuereinrichtung (46, 56) ferner enthält:

eine Vielzahl von Merkeinrichtungen (122-124) für eine frühere Zugriffszeit, die für jeden einer Vielzahl von Bereichen von Adressen der Elemente vorgesehen sind, um einen Zustand entsprechend einer Speicherbelegung für den entsprechenden Bereich für eine vorbestimmte Zeitdauer nach einem Zeitpunkt anzuzeigen, bei dem ein früherer Zugriff für eine Adresse in dem entsprechenden Bereich als zulässig ausgewählt worden ist, eine Einrichtung (119, 126, 125) zum Auswählen eines Zugriffs für eine Adresse unter den Adressen für alle Vektorverarbeitungseinheiten als einen zulässigen Kandidaten, basierend auf einer vorbestimmten Reihenfolge der Elemente der Vektordaten,

eine Adressenbereichs-Bestimmungseinrichtung (131) zum Bestimmen, zu welchem der Vielzahl der Bereiche die als ein zulässiger Kandidat ausgewählte Adresse gehört, und eine Einrichtung (132-135), um den Zugriff nur dann als zulässig auszuwählen, wenn die Merkeinrichtung für die frühere Zugriffszeit, die dem Bereich entspricht, der durch die Adressenbereichs-Bestimmungseinrichtung bestimmt worden ist, keinen Zustand entsprechend einer Speicherbelegung anzeigt.

4. System nach Anspruch 1, bei dem die Prioritätsteuereinrichtung (46, 56) ferner enthält:

eine Anzeigeeinrichtung (125) für das letzte zugelassene Element, um ein Element anzuzeigen, für das das Speicherzugriffssignal zuletzt ausgegeben wurde, und eine Einrichtung (119, 126) zum Auswählen eines nächsten zulässigen Zugriffs, basierend auf der Anzeige der Anzeigeeinrichtung für das letzte zugelassene Element.

5. System nach Anspruch 1, welches ferner enthält:

eine Informations-Zuführeinrichtung (40) zum Empfangen eines Vektorbefehls, der die Information enthält, und die gleichzeitig die Information zu der Vielzahl der adressengenerierenden Einrichtungen zuführt.

6. System nach Anspruch 1, bei dem die Prioritätsteuereinrichtung (46, 56) ferner enthält:

eine Vielzahl von Flagregistern (122, 123, 124) zum Halten von entsprechenden Belegt-Status-Anzeigen von jeweiligen Abschnitten des Speichers, und eine Einrichtung (121), um eines oder mehrere entsprechende Flagregister zu setzen, wenn einer oder mehrere Zugriffe als zulässig ausgewählt werden, und eine Einrichtung (160-180) zum Rücksetzen jedes Flagregisters, nachdem eine erste vorbestimmte Zeitdauer nach dem Setzen derselben verstrichen ist.

7. System nach Anspruch 6, bei dem jede der Vektorverarbeitungseinheiten (41, 42) ferner folgendes enthält:

einen Dekodierer (172 bis 177), eine Verzögerungsschaltung (47, 57), um dann, wenn irgendeines der Flagregister gesetzt wird, die in der Prioritätsteuereinrichtung erzeugte Adresse, die dem gesetzten Flagregister entspricht, in den Dekodierer einzugeben und die Adresse auszugeben, nachdem die erste vorbestimmte Zeitdauer verstrichen ist, und

wobei der Dekodierer die Ausgangsgröße der Verzögerungsschaltung dekodiert und die dekodierten Ergebnisse als Rückstellsignale an die Rückstelleinrichtung zum Rückstellen der Vielzahl der Flagregister (122, 123, 124) anlegt.

8.  System nach Anspruch 1, bei dem jede der Vektorverarbeitungseinheiten (41, 42) ferner enthält:

    ein Vektorregister (49, 59) für ein zeitweiliges Halten von Daten, die aus einer Datenpufferschaltung (48, 58) in der Vektorverarbeitungseinheit übertragen werden, bis die Daten für eine Vektorberechnung ausgelesen werden, wobei die Datenpufferschaltung (48, 58) die Daten zeitweilig hält, die aus dem Speicher ausgelesen wurden, bevor die Daten in das Vektorregister eingelesen werden, und eine Verzögerungsschaltung (47, 57), um dann, wenn ein Zugriff unter den durch deren eigene Vektorverarbeitungseinheit angefragten Zugriffe als zulässig ausgewählt ist, die von der Speicheradressensignal-Ausgabeeinrichtung ausgegebene Adresse in die Datenpufferschaltung einzugeben und die Adresse auszugeben, um die Zeitsteuerung der Eingabe der Daten in das Vektorregister, eine zweite vorbestimmte Zeitdauer nach der Eingabe der Adresse zu steuern.

9.  System nach Anspruch 1, welches ferner eine zentrale Verarbeitungseinheit (21) und einen Eingabe-/Ausgabeprozessor (20) enthält, von denen jeder Zugriffsanfragen erzeugt, wobei

    die Prioritätsteuereinrichtung (46, 56) einen oder mehrere Zugriffe als zulässig aus den Zugriffen für die Adressen auswählt, die durch deren eigene Vektorverarbeitungseinheit angefragt wurde bzw. wurden, und einen Zugriff auswählt, der von dem Eingabe-/Ausgabeprozessor angefragt wurde, und zwar basierend auf den Adressen, die gleichzeitig in der Adressengenerierungseinrichtung der Vielzahl der Vektorverarbeitungseinheiten erzeugt wurden, und auf der Grundlage der vorbestimmten Reihenfolge der Elemente, und die dann ein oder mehrere Signale des Zugriffs an den Speicher ausgibt, der als zulässig ausgewählt wurde.

10. System nach Anspruch 9, bei dem

    die Abschnitt des Speichers (43, 44) auch durch die zentrale Verarbeitungseinheit und den Eingabe-/Ausgabeprozessor zugreifbar sind, und

bei dem die Prioritätsteuereinrichtung (46, 56) den oder jeden zulässigen Zugriff für jeden Abschnitt des Speichers basierend auf den Adressen auswählt, die gleichzeitig in der Adressengenerierungseinrichtung der Vielzahl der Vektorverarbeitungseinheiten erzeugt werden, und basierend auf der vorbestimmten Reihenfolge der Elemente, einer Adresse in dem Zugriff, der von der zentralen Verarbeitungseinheit angefragt wurde, und basierend auf einer Adresse in dem Zugriff, der von dem Eingabe-/Ausgabeprozessor angefragt wurde.

11. System nach Anspruch 10, bei dem die Prioritätsteuereinrichtung (46, 56) ferner enthält:

    eine Vielzahl von Flagregistern (122, 123, 124) zum Halten von entsprechenden Belegt-Status-Anzeigen der jeweiligen Abschnitte des Speichers, und eine Einrichtung (121) zum Setzen von einem oder mehreren entsprechenden Flagregisters, wenn ein oder mehrere Zugriffe als zulässig ausgewählt werden, und eine Einrichtung (160-180) zum Rücksetzen jedes Flagregisters, nachdem eine erste vorbestimmte Zeitdauer nach dem Setzen derselben verstrichen ist.

12. System nach Anspruch 11, bei dem jede der Vektorverarbeitungseinheiten (41, 42) ferner enthält:

    einen Dekodierer (172 bis 177), eine Verzögerungsschaltung (47, 57), um dann, wenn irgendeines der Flagregister (122, 123, 124) gesetzt wird, die in der Prioritätsteuereinrichtung (46, 56) erzeugte Adresse, die dem gesetzten Flagregister entspricht, in den Dekodierer einzugeben und um die genannte Adresse auszugeben, nachdem die erste vorbestimmte Zeitdauer verstrichen ist, und wobei der Dekodierer (172 bis 177) die Ausgangsgröße der Verzögerungsschaltung (47, 57) dekodiert und die dekodierten Ergebnisse als Rückstellsignale an die Rückstelleinrichtung zum Rückstellen der Vielzahl der Flagregister anlegt.

13. System nach Anspruch 9, bei dem jede der Vektorverarbeitungseinheiten (41, 42) ferner enthält:

    ein Vektorregister (49, 59) zum zeitweiligen Halten von Daten, die von einer Datenpufferschaltung (48, 58) in der Vektorverarbeitungseinheit übertragen wurden, bis die Daten für eine Vektorberechnung ausgelesen werden,

wobei die Datenpufferschaltung (48, 58) die Daten zeitweilig hält, die aus dem Speicher ausgelesen wurden, bevor die Daten in das Vektorregister eingegeben werden, und eine Verzögerungsschaltung (47, 57), um dann, wenn ein Zugriff unter den von deren eigenen Vektorverarbeitungseinheit angefragten Zugriffen als zulässig ausgewählt wurde, die von der Speicherzugriffssignal-Ausgabeeinrichtung ausgegebene Adresse in die Datenpufferschaltung einzugeben und die genannten Adressen aus dieser Datenpufferschaltung auszugeben, um die Zeitsteuerung der Eingabe der Daten in das Vektorregister, eine zweite vorbestimmte Zeitdauer nach der Eingabe der Adresse zu steuern.

14. System nach Anspruch 1, welches ferner eine Speicherzugriffs-Steuereinrichtung enthält, die einen indirekten Adressierungsmode-Befehl erzeugt, wobei jede der Vektorverarbeitungseinheiten ferner enthält:

ein Vektorregister (49, 59) für ein zeitweiliges Halten indirekter Adressendaten für eine indirekte Adressierung des Abschnitts der Elemente, die der Vektorverarbeitungseinheit zugewiesen sind, dort, wo Adressendaten aus dem Speicher ausgelesen wurden, und um die indirekten Adressendaten zum Erzeugen effektiver Adressen für die indirekte Adressierung für alle die Elemente der Vektordaten in der Adressengenerierungseinrichtung in allen den Vektorverarbeitungseinheiten zuzuführen, und eine indirekte Adressierungs-Steuereinheit (50, 60) zum Steuern der Leseoperationen der indirekten Adressendaten in das Vektorregister und zum Steuern der Zufuhr der Adressendaten für alle die Vektorverarbeitungseinheiten, wenn von der Speicheradressen-Steuereinheit ein indirekter Adressierungsmode erzeugt wird, eine Adressengenerierungseinrichtung (45, 55), die die effektiven Adressen zum Zugreifen auf alle die Elemente erzeugt, und zwar unter Verwendung der indirekten Adressendaten, die von dem Vektorregister in all den Vektorverarbeitungseinheiten zugeführt werden, wenn durch die Speicherzugriffs-Steuereinheit der indirekte Adressierungsmode erzeugt wird.

15. System nach Anspruch 1, bei dem die Prioritätsteuereinrichtung (46, 56) ferner enthält:

eine Vielzahl von Flagregistern (122, 123, 124), um entsprechende Belegtstatus-Anzeigen der jeweiligen Abschnitte des Speichers (43, 44) zu halten, und

eine Einrichtung (121) zum Setzen von einem oder mehreren entsprechenden Flagregistern, wenn einer oder mehrere Zugriffe als zulässig ausgewählt werden, und eine Einrichtung (160-180) zum Rücksetzen jedes Flagregisters, nachdem eine erste vorbestimmte Zeitdauer nach dem Setzen derselben verstrichen ist.

16. System nach Anspruch 15, bei dem jede der Vektorverarbeitungseinheiten (41, 42) ferner enthält:

einen Dekodierer (172 bis 177), eine Verzögerungsschaltung (47, 57), um dann, wenn irgendeines der Flagregister gesetzt wird, die in der Prioritätsteuereinrichtung erzeugte Adresse, die dem gesetzten Flagregister entspricht, in den genannten Dekodierer einzugeben und um die genannte Adresse auszugeben, nachdem die erste vorbestimmte Zeitdauer verstrichen ist, und wobei der Dekodierer (172 bis 177) die Ausgangsgröße der Verzögerungsschaltung dekodiert und die dekodierten Ergebnisse als Rückstellsignale an die Rückstelleinrichtung anlegt, um die Vielzahl der Flagregister zurückzustellen.

17. System nach Anspruch 14, bei dem das Vektorregister in jeder der Vektorverarbeitungseinheiten zeitweilig Daten hält, die aus dem Speicher ausgelesen wurden, als auch indirekte Adressendaten, bis die Daten für eine Vektorberechnung ausgelesen werden, und

bei dem jede Vektorverarbeitungseinheit (41, 42) ferner folgendes enthält: eine Datenpufferschaltung (48, 58) zum Eingeben von Daten in das Vektorregister, und eine Verzögerungsschaltung (47, 57), um dann, wenn ein Zugriff unter den durch deren eigene Vektorverarbeitungseinheit angefragten Zugriffen als zulässig ausgewählt wird, die durch die Prioritätsteuereinrichtung erzeugte Adresse in die Datenpufferschaltung einzugeben und um die genannte Adresse aus dieser Datenpufferschaltung auszugeben, um die Zeitsteuerung der Eingabe der Daten in das Vektorregister eine zweite vorbestimmte Zeitdauer nach der Eingabe der Adresse zu steuern.

18. System nach Anspruch 14, welches ferner eine zentrale Verarbeitungseinheit (21) und einen Eingabe-/Ausgabeprozessor (20) enthält, die jeweils Zugriffsanfragen erzeugen, wobei:

die Prioritätsteuereinrichtung (46, 56) einen oder mehrere Zugriffe aus den Zugriffen für Adressen als zulässig auswählt, die durch deren eigene Vektorverarbeitungseinheit angefragt wurden, einen von der zentralen Verarbeitungseinheit angefragten Zugriff und einen von dem Eingabe-/Ausgabeprozessor angefragten Zugriff, basierend auf den Adressen als zulässig auswählt, die in der Adressengenerierungseinrichtung der Vektorverarbeitungseinheiten gleichzeitig erzeugt werden, und basierend auf der vorbestimmen Reihenfolge der Elemente auswählt und dann ein oder mehrere Signale des Zugriffs an den Speicher ausgibt, der als zulässig ausgewählt wurde.

19. System nach Anspruch 18, bei dem

die Abschnitte des Speichers (43, 44) auch gleichzeitig von der zentralen Vektorverarbeitungseinheit und dem Eingabe-/Ausgabeprozessor zugreifbar sind, und
bei dem die Prioritätsteuereinrichtung (46, 56) den zulässigen Zugriff aus den Zugriffen für die Adressen auswählt, die durch deren eigene Vektorverarbeitungseinheit angefragt wurden, einen Zugriff, der von der zentralen Verarbeitungseinheit angefragt wurde, und einen Zugriff, der durch den Eingabe-/Ausgabeprozessor angefragt wurde, auswählt, und zwar für jeden Abschnitt des Speichers, basierend auf den Adressen, die gleichzeitig in der Adressengenerierungseinrichtung der Vektorverarbeitungseinheiten erzeugt wurden und basierend auf der Reihenfolge der Elemente und basierend auf einer Adresse in dem Zugriff, der von der zentralen Verarbeitungseinheit angefragt wurde, und basierend auf einer Adresse in dem Zugriff, der von dem Eingabe/Ausgabeprozessor angefragt wurde.

20. System nach Anspruch 19, bei dem die Prioritätsteuereinrichtung (46, 56) folgendes enthält:

eine Vielzahl von Flagregistern (122, 123, 124) zum Halten entsprechender Belegt-Status-Anzeigen von jeweiligen Abschnitten des Speichers, und
eine Einrichtung (121) zum Setzen von einem oder mehreren entsprechenden Flagregistern, wenn einer oder mehrere Zugriffe als zulässig ausgewählt werden, und eine Einrichtung (160-180), um jedes Flagregister, nach dem eine erste vorbestimmte Zeitdauer nach dem Setzen derselben verstrichen ist, zurückzusetzen.

21. System nach Anspruch 20, bei dem jede der Vektorverarbeitungseinheiten ferner enthält:

einen Dekodierer (172 bis 177),
eine Verzögerungsschaltung (47, 57), um dann, wenn irgendeines der Flagregister gesetzt wird, die Adresse, welche in der Prioritätsteuereinrichtung erzeugt wird und dem gesetzten Flagregisters entspricht, in den Dekodierer einzugeben und um die genannte Adresse aus dem Dekodierer auszugeben, nachdem die erste vorbestimmte Zeitdauer verstrichen ist, und
wobei der Dekodierer die Ausgangsgröße der Verzögerungsschaltung dekodiert und die dekodierten Ergebnisse als Rückstellsignale an die Rückstelleinrichtung anlegt, um die Vielzahl der Flagregister zurückzustellen.

22. System nach Anspruch 18, bei dem

das Vektorregister (49, 59) in jeder der Vektorverarbeitungseinheiten zeitweilig Daten hält, die von einer Datenpufferschaltung (48, 58) in der Vektorverarbeitungseinheit übertragen wurden, bis die Daten für eine Vektorberechnung ausgelesen werden, und
bei dem jede der Vektorverarbeitungseinheiten (41, 42) ferner enthält:
eine Datenpufferschaltung (48, 58), um zeitweilig die Daten zu halten, die aus dem Speicher ausgelesen wurden, bevor die Daten in das Vektorregister (49, 59) eingegeben werden, und
eine Verzögerungsschaltung (47, 57), um dann, wenn ein Zugriff unter den Zugriffen, die von deren eigener Vektorverarbeitungseinheit angefragt wurden, als zulässig ausgewählt wird, die von der Speicherzugriffssignal-Ausgabeeinrichtung ausgegebene Adresse in die Datenpufferschaltung einzugeben und die Adresse auszugeben, um die Zeitsteuerung der Eingabe der Daten in das Vektorregister zu steuern, nachdem eine zweite vorbestimmte Zeitdauer nach der Eingabe der Adresse verstrichen ist.

## Revendications

1. Système de traitement vectoriel pour mettre en oeuvre un traitement de données vectorielles incluant une recherche de données vectorielles dans une mémoire principale (43, 44), une mise en oeuvre de calculs vectoriels et un stockage de données vectorielles dans ladite mémoire (43, 44), le système comprenant une pluralité d'unités de traitement vectoriel (41, 42), chacune d'entre elles servant à mettre en oeuvre un traitement de données vectorielles pour une partie des éléments qui sont assignés à l'unité de traitement vectoriel parmi tous les éléments de données vectorielles, dans lequel ladite mémoire (43, 44) comprend une pluralité de parties qui sont accessibles concurremment au moins par lesdites unités de traitement vectoriel (41, 42), dans lequel ledit traitement de données vectorielles dans ladite pluralité d'unités de traitement vectoriel (41, 42) est concurremment mis en oeuvre, tous lesdits éléments sont ordonnés, et ledit traitement de données vectorielles est mis en oeuvre selon ledit ordre des éléments,

caractérisé en ce que chacune desdites unités de traitement vectoriel (41, 42) comprend :

un moyen de génération d'adresse (45, 55) pour recevoir une information servant à générer des adresses des éléments des données vectorielles pour toutes les unités de traitement vectoriel et à générer, sur la base de l'information reçue, lesdites adresses des éléments des données vectorielles pour toutes les unités de traitement vectoriel ;

un moyen de commande de priorité (46, 56) pour recevoir lesdites adresses pour toutes les unités de traitement vectoriel (41, 42) à partir dudit moyen de génération d'adresse dans chaque unité de traitement vectoriel, et pour sélectionner, comme pouvant être autorisé, un accès à une adresse parmi lesdites adresses pour toutes les unités de traitement vectoriel, sur la base d'un ordre prédéterminé des éléments de données vectorielles ; et

un moyen d'émission en sortie de signal d'accès mémoire pour émettre en sortie un signal d'accès mémoire incluant ladite adresse, pour laquelle ledit accès est sélectionné comme pouvant être autorisé par ledit moyen de commande de priorité, sur ladite mémoire (43, 44) ; et en ce que

ledit moyen de commande de priorité (46, 56) sélectionne au plus un accès comme pouvant être autorisé parmi au moins lesdits accès aux adresses qui sont demandés par sa propre unité de traitement vectoriel pour chaque dite partie de ladite mémoire, sur la base desdites adresses concurremment générées dans ledit moyen de génération d'adresse de ladite pluralité d'unités de traitement vectoriel, et dudit ordre prédéterminé des éléments, et il émet alors en sortie un ou plusieurs signaux de l'accès qui est sélectionné comme pouvant être autorisé sur ladite mémoire.

**2.** Système selon la revendication 1, dans lequel ledit moyen de commande de priorité (46, 56) comprend en outre :

un moyen de mémorisation de temps d'accès précédent (122 à 124) pour indiquer un état d'occupation de mémoire pendant une durée temporelle prédéterminée après un temps pour lequel un accès précédent est sélectionné comme pouvant être autorisé ; et

un moyen (111 à 119) pour sélectionner ledit accès comme pouvant être autorisé seulement lorsque ledit moyen de mémorisation de temps d'accès précédent n'indique pas ledit état d'occupation de mémoire.

**3.** Système selon la revendication 1, dans lequel ledit moyen de commande de priorité (46, 56) comprend en outre :

une pluralité de moyens de mémorisation de temps d'accès précédent (122 à 124) prévus pour chacune d'une pluralité de plages des adresses des éléments, pour indiquer un état d'occupation de mémoire de la plage correspondante pendant une durée temporelle prédéterminée après un temps pour lequel un accès précédent à une adresse dans la plage correspondante est sélectionné comme pouvant être autorisé ;

un moyen (119, 126, 125) pour sélectionner un accès à une adresse, parmi lesdites adresses pour toutes les unités de traitement vectoriel, en tant que candidat pouvant être autorisé, sur la base d'un ordre prédéterminé des éléments des données vectorielles ;

un moyen de détermination de plage d'adresse (131) pour déterminer à laquelle de ladite pluralité de plages ladite adresse, sélectionnée en tant que candidat pouvant être autorisé, appartient ; et

un moyen (132 à 135) pour sélectionner ledit accès comme pouvant être autorisé seulement lorsque ledit moyen de mémorisation de temps d'accès précédent, correspondant à la plage déterminée par ledit moyen de détermination de plage d'adresse, n'indique pas ledit état d'occupation de mémoire.

**4.** Système selon la revendication 1, dans lequel ledit moyen de commande de priorité (46, 56) comprend en outre :

un moyen d'indication d'élément alloué en dernier (125) pour indiquer un élément pour lequel le signal d'accès mémoire a été émis en sortie en dernier ; et

un moyen (119, 126) pour sélectionner un accès pouvant être autorisé suivant sur la base de l'indication dudit moyen d'indication d'élément alloué en dernier.

**5.** Système selon la revendication 1, comprenant en outre :

un moyen d'application d'information (40) pour recevoir une information vectorielle incluant ladite information, et appliquant simultanément l'information à ladite pluralité de moyens de génération d'adresse.

6. Système selon la revendication 1, dans lequel ledit moyen de commande de priorité (46, 56) comprend en outre :

une pluralité de registres d'indicateur (122, 123, 124) pour bloquer des indications d'état d'occupation correspondantes de parties respectives de ladite mémoire ; et
un moyen (121) pour établir un ou plusieurs registres d'indicateur correspondants lors d'une sélection d'un ou de plusieurs accès comme pouvant être autorisés, et un moyen (160 à 180) pour remettre à l'état initial chaque registre d'indicateur après qu'un premier temps prédéterminé après son établissement se soit écoulé.

7. Système selon la revendication 6, dans lequel chacune desdites unités de traitement vectoriel (41, 42) comprend en outre :

un décodeur (172 à 177) ;
un circuit de retard (47, 57) pour entrer, lors de l'établissement de l'un quelconque desdits registres d'indicateur, l'adresse générée dans ledit moyen de commande de priorité correspondant au registre d'indicateur établi, et pour émettre en sortie ladite adresse sur ledit décodeur après que ledit premier temps prédéterminé se soit écoulé ; et
ledit décodeur décodant ladite sortie dudit circuit de retard et appliquant les résultats décodés en tant que signaux de remise à l'état initial audit moyen de remise à l'état initial pour remettre à l'état initial ladite pluralité de registres d'indicateur (122, 123, 124).

8. Système selon la revendication 1, dans lequel chacune desdites unités de traitement vectoriel (41, 42) comprend en outre :

un registre vectoriel (49, 59) pour bloquer temporairement des données qui sont transférées depuis un circuit tampon de données (48, 58) dans l'unité de traitement vectoriel jusqu'à ce que les données soient lues en vue d'un calcul vectoriel ;
ledit circuit tampon de données (48, 58) bloquant temporairement lesdites données qui sont lues dans la mémoire, avant d'entrer les données dans ledit registre vectoriel ; et
un circuit de retard (47, 57) pour entrer, lorsqu'un accès pris parmi lesdits accès demandés par sa propre unité de traitement vectoriel est sélectionné comme pouvant être autorisé, l'adresse émise en sortie par ledit moyen d'émission en sortie de signal d'accès mémoire et pour émettre en sortie ladite adresse sur ledit circuit tampon de données pour commander le cadencement de ladite entrée des données dans ledit registre vectoriel, un second temps prédéterminé après l'entrée de ladite adresse.

9. Système selon la revendication 1, incluant en outre une unité centrale de traitement (21) et un processeur d'entrée/sortie (20), chacun d'entre eux produisant des demandes d'accès, dans lequel :

ledit moyen de commande de priorité (46, 56) sélectionne un ou plusieurs accès comme pouvant être autorisés, à partir d'accès à des adresses qui sont demandés par sa propre unité de traitement vectoriel, d'un accès demandé par ladite unité centrale de traitement et d'un accès demandé par ledit processeur d'entrée/sortie, sur la base desdites adresses concurremment générées dans ledit moyen de génération d'adresse de ladite pluralité d'unités de traitement vectoriel, et dudit ordre prédéterminé des éléments, et il émet alors en sortie un ou plusieurs signaux de l'accès qui est sélectionné comme pouvant être autorisé, sur ladite mémoire.

10. Système selon la revendication 9, dans lequel :

lesdites parties de ladite mémoire (43, 44) sont aussi accessibles par ladite unité centrale de traitement et par ledit processeur d'entrée/sortie ; et
ledit moyen de commande de priorité (46, 56) sélectionne le ou chaque accès pouvant être autorisé à chaque partie de ladite mémoire, sur la base desdites adresses concurremment générées dans ledit moyen de génération d'adresse de ladite pluralité d'unités de traitement vectoriel, dudit ordre prédéterminé des éléments, d'une adresse lors dudit accès demandé par ladite unité centrale de traitement et d'une adresse lors dudit accès demandé par ledit processeur d'entrée/sortie.

11. Système selon la revendication 10, dans lequel ledit moyen de commande de priorité (46, 56) comprend en outre :

une pluralité de registres d'indicateur (122, 123, 124) pour bloquer des indications d'état d'occupation correspondantes des parties respectives de ladite mémoire ; et

un moyen (121) pour établir un ou plusieurs registres d'indicateur correspondants lors d'une sélection d'un ou de plusieurs accès comme pouvant être autorisés, et un moyen (160 à 180) pour remettre à l'état initial chaque registre d'indicateur après qu'un premier temps prédéterminé après son établissement se soit écoulé.

12. Système selon la revendication 11, dans lequel chacune desdites unités de traitement vectoriel (41, 42) comprend en outre :

un décodeur (172 à 177) ;

un circuit de retard (47, 57) pour entrer, lors d'un établissement de l'un quelconque desdits registres d'indicateur (122, 123, 124), l'adresse générée dans ledit moyen de commande de priorité (46, 56) correspondant au registre d'indicateur établi et pour émettre en sortie ladite adresse sur ledit décodeur après que ledit premier temps prédéterminé se soit écoulé ; et

ledit décodeur (172 à 177) décodant ladite sortie dudit circuit de retard (47, 57) et appliquant les résultats décodés en tant que signaux de remise à l'état initial sur ledit moyen de remise à l'état initial pour remettre à l'état initial ladite pluralité de registres d'indicateur.

13. Système selon la revendication 9, dans lequel chacune desdites unités de traitement vectoriel (41, 42) comprend en outre :

un registre vectoriel (49, 59) pour bloquer temporairement des données qui sont transférées depuis un circuit tampon de données (48, 58) dans l'unité de traitement vectoriel, jusqu'à ce que les données soient lues en vue d'un calcul vectoriel ;

ledit circuit tampon de données (48, 58) bloquant temporairement lesdites données qui sont lues dans la mémoire avant d'entrer les données dans ledit registre vectoriel ; et

un circuit de retard (47, 57) pour entrer, lorsqu'un accès pris parmi lesdits accès demandés par sa propre unité de traitement vectoriel est sélectionné comme pouvant être autorisé, l'adresse émise en sortie par ledit moyen d'émission en sortie de signal d'accès mémoire, et pour émettre en sortie ladite adresse sur ledit circuit tampon de données pour commander le cadencement de ladite entrée des données dans ledit registre vectoriel, un second temps prédéterminé après l'entrée de ladite adresse.

14. Système selon la revendication 1, incluant en outre un contrôleur d'accès mémoire générant une instruction de mode d'adressage indirect, dans lequel chacune desdites unités de traitement vectoriel comprend en outre :

un registre vectoriel (49, 59) pour bloquer temporairement des données d'adresse indirecte en vue d'un adressage indirect de ladite partie d'éléments assignée à l'unité de traitement vectoriel, où lesdites données d'adresse ont été lues dans ladite mémoire, et pour appliquer les données d'adresse indirecte pour générer des adresses effectives de l'adressage indirect pour tous les éléments des données vectorielles dans ledit moyen de génération d'adresse dans toutes les unités de traitement vectoriel ; et

un contrôleur d'adressage indirect (50, 60) pour commander des opérations de lecture desdites données d'adresse indirecte dans ledit registre vectoriel, et pour commander l'application des données d'adresse pour toutes les unités de traitement vectoriel, lorsqu'un mode d'adressage indirect est généré par ledit contrôleur d'accès mémoire ;

ledit moyen de génération d'adresse (45, 55) générant lesdites adresses effectives pour accéder à tous les éléments en utilisant lesdites données d'adresse indirecte générées par ledit registre vectoriel dans toutes les unités de traitement vectoriel, lorsque ledit mode d'adressage indirect est généré par ledit contrôleur d'accès mémoire.

15. Système selon la revendication 1, dans lequel ledit moyen de commande de priorité (46, 56) comprend en outre :

une pluralité de registres d'indicateur (122, 123, 124) pour bloquer des indications d'état d'occupation correspondantes de parties respectives de ladite mémoire (43, 44) ; et

un moyen (121) pour établir un ou plusieurs registres d'indicateur correspondants lors d'une sélection d'un ou de plusieurs accès comme pouvant être autorisés, et un moyen (160 à 180) pour remettre à l'état initial chaque registre d'indicateur après qu'un premier temps prédéterminé après son établissement se soit écoulé.

16. Système selon la revendication 15, dans lequel chacune desdites unités de traitement vectoriel (41, 42) comprend en outre :

un décodeur (172 à 177) ;

un circuit de retard (47, 57) pour entrer, lors d'un établissement de l'un quelconque desdits registres d'indicateur, l'adresse générée dans ledit moyen de commande de priorité correspondant au registre d'indicateur établi et pour émettre en sortie ladite adresse sur ledit décodeur après que ledit premier temps prédéterminé se soit écoulé ; et

ledit décodeur (172 à 177) décodant ladite sortie dudit circuit de retard et appliquant les résultats décodés en tant que signaux de remise à l'état initial sur ledit moyen de remise à l'état initial pour remettre à l'état initial ladite pluralité de registres d'indicateur.

**17.** Système selon la revendication 14, dans lequel :

ledit registre vectoriel dans chacune desdites unités de traitement vectoriel bloque temporairement des données qui sont lues dans la mémoire, ainsi que lesdites données d'adresse indirecte, jusqu'à ce que les données soient lues en vue d'un calcul vectoriel ; et

chacune desdites unités de traitement vectoriel (41, 42) comprend en outre :

un circuit tampon de données (48, 58) pour entrer les données dans ledit registre vectoriel ; et

un circuit de retard (47, 57) pour entrer, lorsqu'un accès pris parmi lesdits accès demandés par sa propre unité de traitement vectoriel est sélectionné comme pouvant être autorisé, l'adresse générée par ledit moyen de commande de priorité, et pour émettre en sortie ladite adresse sur ledit circuit tampon de données pour commander le cadencement de ladite entrée des données dans ledit registre vectoriel, un second temps prédéterminé après l'entrée de ladite adresse.

**18.** Système selon la revendication 14, incluant en outre une unité centrale de traitement (21) et un processeur d'entrée/sortie (20), chacun d'entre eux produisant des demandes d'accès, dans lequel :

ledit moyen de commande de priorité (46, 56) sélectionne un ou plusieurs accès comme pouvant être autorisés parmi lesdits accès à des adresses qui sont demandés par sa propre unité de traitement vectoriel, un accès demandé par ladite unité centrale de traitement et un accès demandé par ledit processeur d'entrée/sortie, sur la base desdites adresses concurremment générées dans ledit moyen de génération d'adresse desdites unités de traitement vectoriel, et dudit ordre prédéterminé des éléments, et il émet alors en sortie un ou plusieurs signaux de l'accès qui est sélectionné comme pouvant être autorisé sur ladite mémoire.

**19.** Système selon la revendication 18, dans lequel :

lesdites parties de ladite mémoire (43, 44) sont aussi concurremment accessibles à partir de ladite unité centrale de traitement et dudit processeur d'entrée/sortie ; et

ledit moyen de commande de priorité (46, 56) sélectionne ledit accès comme pouvant être autorisé parmi des accès à des adresses qui sont demandés par sa propre unité de traitement vectoriel, un accès demandé par ladite unité centrale de traitement et un accès demandé par ledit processeur d'entrée/sortie, pour chaque dite partie de ladite mémoire, sur la base desdites adresses concurremment générées dans ledit moyen de génération d'adresse desdites unités de traitement vectoriel, dudit ordre des éléments, d'une adresse lors dudit accès demandé par l'unité centrale de traitement et d'une adresse lors dudit accès demandé par le processeur d'entrée/sortie.

**20.** Système selon la revendication 19, dans lequel ledit moyen de commande de priorité (46, 56) comprend :

une pluralité de registres d'indicateur (122, 123, 124) pour bloquer des indications d'état d'occupation correspondantes des parties respectives de ladite mémoire ; et

un moyen (121) pour établir un ou plusieurs registres d'indicateur correspondants lors de la sélection d'un ou de plusieurs accès comme pouvant être autorisés et un moyen (160 à 180) pour remettre à l'état initial chaque registre d'indicateur après qu'un premier temps prédéterminé après son établissement se soit écoulé.

**21.** Système selon la revendication 20, dans lequel chacune desdites unités de traitement vectoriel comprend en outre :

un décodeur (172 à 177) ;

un circuit de retard (47, 57) pour entrer, lors d'un établissement de l'un quelconque desdits registres d'indicateur, l'adresse générée dans ledit moyen de commande de priorité correspondant au registre d'indicateur établi et pour émettre en sortie ladite adresse sur ledit décodeur après que ledit premier temps prédéterminé se soit écoulé ; et

ledit décodeur décodant ladite sortie dudit circuit de retard et appliquant les résultats décodés en tant que signaux de remise à l'état initial sur ledit moyen de remise à l'état initial pour remettre à l'état initial ladite pluralité de registres d'indicateur.

22. Système selon la revendication 18, dans lequel :

ledit registre vectoriel (49, 59) dans chacune desdites unités de traitement vectoriel bloque temporairement des données qui sont transférées depuis un circuit tampon de données (48, 58) dans l'unité de traitement vectoriel, jusqu'à ce que les données soient lues en vue d'un calcul vectoriel ; et
chacune desdites unités de traitement vectoriel (41, 42) comprend en outre :
un circuit tampon de données (48, 58) pour bloquer temporairement lesdites données qui sont lues dans la mémoire, avant une émission en sortie des données dans ledit registre vectoriel (49, 59) ; et
un circuit de retard (47, 57) pour entrer, lorsqu'un accès pris parmi lesdits accès demandés par sa propre unité de traitement vectoriel est sélectionné comme pouvant être autorisé, l'adresse émise en sortie par ledit moyen d'émission en sortie de signal d'accès mémoire et pour émettre en sortie ladite adresse sur ledit circuit tampon de données, pour commander le cadencement de ladite entrée des données dans ledit registre vectoriel, après qu'un second temps prédéterminé après l'entrée de ladite adresse se soit écoulé.

*Fig. 1*

VECTOR PROCESSING CONTROLLER — 1

VECTOR PROCESSING UNIT — 2

ADDRESS GENERATOR — 5

PRIORITY CONTROLLER — 6

VECTOR REGISTER — 7

DATA BUFFER — 8

VECTOR PROCESSING UNIT — 3

ADDRESS GENERATOR — 9

PRIORITY CONTROLLER — 10

VECTOR REGISTER — 11

DATA BUFFER — 12

13

MAIN STORAGE — 4

SU-1

SU-2

SU-3

SU-4

# Fig. 2

ACCESSIBLE TIMING ————————————————————→

VECTOR
PROCESSING
UNIT
{
SU-0
SU-1
SU-2
SU-3
}

VECTOR
PROCESSING
UNIT
{
SU-0
SU-1
SU-2
SU-3
}

EP 0 368 587 B1

# Fig. 3

FIRST VECTOR PROCESSING UNIT

23

25 ADDRESS GENERATOR

26 PRIORITY CONTROLLER

4' MAIN STORAGE UNIT

22 VECTOR PROCESSING CONTROLLER

30 INDIRECT ADDRESSING CONTROLLER

27 DELAY CIRCUIT

29 VECTOR REGISTER

28 DATA BUFFER

21 SCALAR UNIT (CPU)

20 I/O PROCESSOR

25' ADDRESS GENERATOR

26' PRIORITY CONTROLLER

30' INDIRECT ADDRESSING CONTROLLER

27' DELAY CIRCUIT

29' VECTOR REGISTER

28' DATA BUFFER

24 SECOND VECTOR PROCESSING UNIT

Fig. 4

EP 0 368 587 B1

*Fig. 5*

EP 0 368 587 B1

*Fig. 6*

Fig. 7

EP 0 368 587 B1

## Fig. 8

$\overline{FFO} \sim \overline{FF127}$

96'  RQA

97'  RQB

98'  RQC

99'  RQD

111' BUSY CHECK
112' BUSY CHECK
113' BUSY CHECK
114' BUSY CHECK

115' G  REQA-OK
116' G  REQB-OK
117' G  REQC-OK
118' G  REQD-OK

119' PRIOR 1

PRE-PRIO-REQA
PRE-PRIO-REQB
PRE-PRIO-REQC
PRE-PRIO-REQD

CPU REQ
IOP REQ

126'

120' PRIOR 2

VU-PRIORITY-OK-A
VU-PRIORITY-OK-B
VU-PRIORITY-OK-C
VU-PRIORITY-OK-D
PRIORITY-OK-CPU
PRIORITY-OK-IOP
VU-PRIORITY-OK-C → TO REGISTER 102'
VU-PRIORITY-OK-D → TO REGISTER 103'

121' FF SETTING CIRCUIT

FFO 122' S R → $\overline{FFO}$
FF1 123' S R → $\overline{FF1}$
FF127 124' S R → $\overline{FF127}$

POINTER CIRCUIT ~125'

# Fig. 9

# Fig. 10

BANK-REQ O FROM A — 140
VU-PRIORITY-OK-A —

BANK-REQ O FROM B — 141
VU-PRIORITY-OK-B —

BANK-REQ O FROM C — 142
VU-PRIORITY-OK-C —

BANK-REQ O FROM D — 143
VU-PRIORITY-OK-D —

BANK-REQ O FROM CPU — 144
PRIORITY-OK-CPU —

BANK-REQ O FROM IOP — 145
PRIORITY-OK-IOP —

152 → FFO SET

BANK-REQ 127 FROM A — 146
VU-PRIORITY-OK-A —

BANK-REQ 127 FROM B — 147
VU-PRIORITY-OK-B —

BANK-REQ 127 FROM C — 148
VU-PRIORITY-OK-C —

BANK-REQ 127 FROM C — 149
VU-PRIORITY-OK-D —

BANK-REQ 127 FROM CPU — 150
PRIORITY-OK-CPU —

BANK-REQ 127 FROM IOP — 151
PRIORITY-OK-IOP —

153 → FF 127 SET

Fig. 11

EP 0 368 587 B1